# EUROPEAN PATENT SPECIFICATION

(11) **EP 3 174 953 B1**
(45) Date of publication and mention of the grant of the patent: **02.09.2020**
(21) Application number: 15826836.7
(22) Date of filing: 30.07.2015
(51) Int. Cl.: C09K 11/02, F41H 3/00, D06P 1/00, D06P 1/39, D06P 1/50, D06P 1/52, D06P 1/607, D06P 3/82, C09K 11/06, F41H 3/02

(54) **ENVIRONMENTALLY RESPONSIVE CHROMATIC LUMINESCENT COMPOSITIONS WITH IMPROVED HAND**
UMWELT-REAKTIVE CHROMATISCH-LUMINESZENZ-ZUSAMMENSETZUNGEN MIT VERBESSERTER TAKTILER WAHRNEHMUNG
COMPOSITIONS LUMINESCENTES CHROMATIQUES RÉACTIVES À L'ENVIRONNEMENT PROCURANT UNE SENSATION TACTILE AMÉLIORÉE

(30) Priority: 31.07.2014 US 201414448277
(43) Date of publication of application: 07.06.2017
(73) Proprietor: Bambu Vault LLC, Lowell, MA 01852 (US)
(72) Inventor: AGRAWAL, Satish, Concord, MA 01742 (US); PARKER, Cliff, New Ipswich, NH 03071 (US); CINCOTTA, Louis, Andover, MA 01810 (US)
(74) Representative: Boult Wade Tennant LLP
(86) International application number: PCT/US2015/042817
(87) International publication number: WO 2016/019100

(56) References cited:
- EP-A2- 0 646 673
- JP-A- H0 533 276
- JP-A- 2006 133 360
- US-A- 4 481 422
- US-A- 4 495 239
- US-A- 5 409 760
- US-A1- 2013 288 022

## Description

### FIELD OF THE INVENTION

This technology is generally in the field of environmentally responsive textiles that have good fabric hand that have been treated with luminescent (emissive) and non-luminescent (absorptive) materials to form improved camouflage materials whose color, brightness, and frequency adapt with ambient light.

### BACKGROUND OF THE INVENTION

Camouflage systems are sophisticated combinations of colored macro- and/or micro-patterns, which are developed to address disruption of shape and background matching for the purpose of concealment. These systems generally use absorptive pigments that subtract a certain fraction of incident radiation to produce a desired reflectance value, so as to achieve a brightness level similar to that of the selected surrounding for which concealment is warranted. However, once applied to fabric, the current camouflage systems produce a reflectance value and pattern frequency that is static, i.e., the camouflage systems will not change as the environment and/or terrain changes, and are therefore unlikely to be as effective throughout the 24-hour day/night cycle, or where different terrains are encountered. These static compositions do not change with the environment, which can be a problem when an individual moves from a brightly lit area into shadow or vice versa. As a result, the use of these compositions is substantially limiting. To be adaptive to the environment when the environment is darker, the color of the camouflage should become less bright to better blend in with the surroundings and conversely, for very bright surroundings, the colors should be brighter.

Attempts have been made at adaptive camouflage materials. However, they have not utilized emissive materials. For example, US Patent No. 5,985,381 to Connor and US Patent No. 5,144,877 to Parks disclose the use of both photochromic (photochromatic) and thermochromic (thermochromatic) dye technologies for adaptive camouflage. However, both technologies rely on the change in absorptive properties of the materials as a function of incident electromagnetic radiation. The change in absorption occurs via molecular rearrangements following sunlight exposure to affect color change, i.e., these camouflages go from a colorless or light colored state to a darker colored state. Given that these technologies rely on absorptive properties, they cannot
be used to enhance brightness. Thus, undesirably, the contrast between the object and the surroundings is increased in a brighter environment.

US Publication No. 2013/0288022 and US Publication No. 2013/0288075 both to Agrawal et al., describe an adaptive camouflage system that includes chromic (chromatic) luminescent compositions that have a "dynamic effect," i.e., Agrawal et al. provide compositions that can modulate color, brightness and/or frequency in response to variations in ambient lighting conditions. However, the resultant fabric feels stiff, rough, harsh, and does not have the appropriate "hand," a term used in the industry to describe sensorial comfort. US 2013/288022 A1 relates to chromic (chromatic) luminescent compositions and textiles.

Therefore, there is a need to solve the problem of providing textiles/fabrics that display an adequate "dynamic effect," while simultaneously having a desirable "hand," an essential quality for usage of the fabric.

It is therefore an object of the present disclosure to provide adaptive camouflage textile materials that have an acceptable "hand."

It is also an object of the present disclosure to provide a method for making adaptive camouflage textile materials that also have an acceptable "hand."

### SUMMARY OF THE INVENTION

The invention is as defined in the claims appended hereto. In particular, in a first aspect there is provided a textile, fabric or other flexible material having applied thereto a chromatic luminescent composition, comprising at least one non-luminescent material, at least one luminescent material and at least one binder,
wherein the chromatic luminescent composition modulates color, brightness and/or frequency through absorption and emission as a function of incident electromagnetic radiation, and
wherein the weight ratio of the at least one binder to the at least one luminescent material is between 3.8:1 and 10:1, and
wherein the fluorescence of the chromatic luminescent composition is greater than 5000 a.u. when the chromatic luminescent composition is excited at 470 nm and the fluorescence is measured at λmax of 518.6.

In a second aspect of the invention there is provided a chromatic luminescent composition, comprising at least one non-luminescent material, at least one luminescent material and at least one binder, wherein the chromatic luminescent composition modulates color, brightness and/or frequency through absorption and emission as a function of incident electromagnetic radiation,
wherein the chromatic luminescent composition applied to a textile does not significantly alter the hand of the textile, and
wherein the ratio of binder to luminescent material is 3.8:1 to 10:1, and wherein the fluorescence of the chromatic luminescent composition is greater than 5000 a.u. when the chromatic luminescent composition is excited at 470 nm and the fluorescence is measured at λmax of 518.6.

In a third aspect of the invention there is provided a method for making the material of the first aspect of the invention, comprising applying a solution or suspension of the chromatic luminescent composition in accordance with the second aspect of the invention to a material selected from the group consisting of clothing, tents, weapon and vehicle covers, netting, parachutes, and other fabrics, textiles, and coverings, and removing the solvent,

Formulations for increasing the hand of fabrics treated with chromatic luminescent compositions (CLC) that modulate color, brightness and/or frequency through absorption and emission as a function of incident electromagnetic radiation, as compared to a textile material that does not include the CLC are described. The incident electromagnetic radiation can emanate from at least one of a natural light source or an artificial light source.

The CLC includes at least one non-luminescent material and at least one luminescent material. The type and proportion of the non-luminescent materials and luminescent materials, as well as appropriate ratios of binder to luminescent materials, provide a CLC wherein the color, brightness and/or frequency are modulated through absorption and emission as a function of incident electromagnetic radiation and the treated fabric exhibits good fabric hand. The non-luminescent materials can be organic non-fluorescent materials or inorganic non-fluorescent materials. At least one of the non-luminescent materials included in the CLC may have an absorption spectrum that at least partially overlaps with the spectrum of the incident electromagnetic radiation. The luminescent materials can be organic fluorescent materials or inorganic fluorescent materials. At least one of the luminescent materials included in the CLC can convert at least a portion of the energy of incident electromagnetic radiation to a lower energy wavelength. In some embodiments the luminescent materials include C.I. Acid Yellow 7 (brilliant sulfaflavine, CAS Reg. No. 2391-30-2), TERASIL Flavine 10GFF (CAS Reg. No. 12221-32-5), Fluorescent Blue G, C.I. Acid Red 131 (CAS Reg. No. 12234-99-0), SYNTHROWITE NWV, and C.I. Acid Violet 48 (CAS Reg. No. 12220-51-8). The luminescent materials used will be determined by the desired dynamic effect, as a function of type of fabric selected, the depth of the color printed.

In some embodiments the percent compositions of non-luminescent/luminescent materials included in the CLC are in the range from 2/90% to 20/80%. While this ratio can describe the range in some embodiments, the actual range will depend upon the fluorescent quantum yield of the luminescent components selected, the desired depth of color and the desired dynamic color change. The actual ratio of the non-luminescent materials to the luminescent materials can vary greatly, ranging from compositions favoring the luminescent materials as given in the examples to those having a majority of non-luminescent materials.

The CLC can include, or be administered at the time, additives such as thickeners, defoamers, and dispersants. Polymers and/or other binders (referred to herein as "binders") are selected to not only provide adhesion of the CLC to the fabric, without causing unacceptable stiffness or roughness but also for maximizing luminance (compatibility with polymer),that is, emissive component. The luminescent material and binder included in the CLC are in a ratio which is dependent on the quantum yield of the luminescent materials used and the desired hand of the preferred fabric. This is determined by the procedure described below. The weight ratio of the at least one binder to the at least one luminescent material included in the CLC is in the range from 3.8:1 to 10:1.

The materials can be applied to any fabric, including natural materials such as cotton and silk, and synthetic materials such as polyesters, rayon and nylon. These can be made into, or are in the form of, clothing, tents, flags, coverings for buildings, areas, vehicles and watercraft. They are particularly useful in military and hunting applications. In an embodiment, the material is a textile, referred to as chromatic Luminescent Camouflage Textile (LCT). LCT provides adaptive camouflage as a function of the ambient lighting environment, with an acceptable sensorial comfort ("hand").

Also provided is a method for making a chromatic luminescent composite material. The method includes applying the CLC and binder onto a suitable material. In some embodiments, the CLC is applied to the material treated with the binder; in another embodiment they are applied together. Application of the binder after application of the CLC can be utilized, but is not as preferred. The luminescent component(s) of the CLC which possess complementary interacting properties (for example ionic properties) are selected for compatibility with the surface of the textile. The ratio of binder to luminescent material included in the CLC can be determined according to the screening procedure described below. For the binder luminescent materials pairs described in examples below, the range is from 3.8:1 to 10:1. The CLC can be applied to the fabric using methods well known to those in the art of printing and dyeing of textiles such as, but not limited to, vat dyeing, dip coating, screen printing, ink jet printing and/or transfer printing.

### BRIEF DESCRIPTION OF THE DRAWINGS

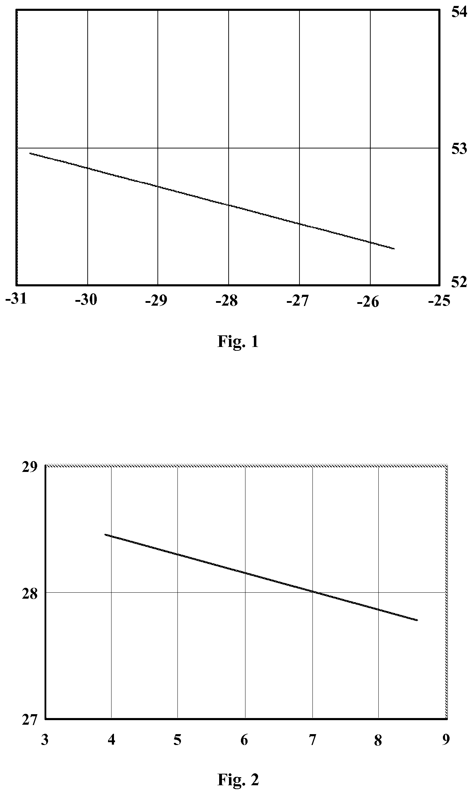

The following description applies to the graphs presented in FIGS. 1 - 6:

The 'X' or horizontal axis of the graphs represents the 'a' value of the CIELab color space (see description in Measuring Dynamic Effect below). Each block represents one color unit. The values will range from green (left) to red (right).

The 'Y' or vertical axis of the graphs represents the 'b' value of the CIELab color space. Each block represents one color unit. The values will range from blue (lower values) to yellow (higher values).
FIG. 1 shows the color change of the ink formulation 1 when moving from daylight to shade.
FIG. 2 shows the color change of the ink formulation 2 when moving from daylight to shade.
FIG. 3 shows the color change of the ink formulation 3 when moving from daylight to shade.
FIG. 4 shows the color change of the ink formulation 4 when moving from daylight to shade.
FIG. 5 shows the color change of the ink formulation 5 when moving from daylight to shade.
FIG. 6 shows the color change of the ink formulation 6 when moving from daylight to shade.

### DETAILED DESCRIPTION OF THE INVENTION

"Luminescence" as used herein refers to the emission of electromagnetic radiation from any substance. Luminescence occurs from electronically excited states following excitation of the ground state of the substance by an energy source.
"Non-luminescent material" as used herein is a material that absorbs incident electromagnetic radiation and does not substantially emit electromagnetic radiation subsequent to exposure to incident electromagnetic radiation.
"Luminescent material" as used herein is a material which exhibits luminescence, as defined above. To those of skill in the art, a luminescent material absorbs electromagnetic radiation at a first wavelength and re-emits the radiation at a second wavelength that is longer and lower in energy than the first wavelength.
"Frequency" as used herein is defined as the reciprocal of the mean distance between one or more shapes and/or one or more patterns of a single or multiple colors used to mimic the surrounding environment and/or terrain and encompasses both configural information, i.e., sharp edges, fine details, etc., as well as global information about the shape, i.e., general orientation and proportions. The smaller the mean distance, the greater the frequency.
"Emissive colorant" as used herein is a material that exhibits luminescence.
"Emissive component" as used herein is the luminescent output of an emissive colorant, as defined above.
"Quantum yield" as used herein is defined as the ratio of the photons absorbed to the photons emitted through luminescence, as defined above. Furthermore, it is the probability of the excited state being deactivated by luminescence, as defined above, rather than by another non-radiative mechanism.
"Self-quenching" as used herein refers to a bimolecular process that reduces the fluorescence quantum yield without changing the fluorescence spectrum. Self-quenching is the quenching of one fluorophore by another and as such tends to occur under high concentrations of fluorophore.
"Incident electromagnetic radiation" as used herein is defined as any light source, natural and/or artificial, radiating within the surrounding environment.
"Ambient light" is a term used herein synonymously with "incident electromagnetic radiation," as defined above.
"Dynamic effect" as used herein refers to an ink system exhibiting color, brightness, and pattern frequency that can very as a function of environment
The term "hand" is as used herein describes the way a fabric feels when it is touched. Terms like softness, crispness, dryness and silkiness are all terms that describe the hand of the fabric. A good hand refers to shape retention without stiffness.
As used herein the term "photopic" refers to the weighting of the measured luminance by the human eye response function
The term "fabric" as used herein refers to a surface on which the formulations can be applied. In some embodiments, the surface includes a textile material.
As used herein, a "dye" is a substance that displays color and can be employed to change and/or enhance the color of another substance when it is applied into or onto that substance. In various embodiments a dye is applied in solid form or as a solution. In some embodiments a dye is applied as a solution.
As used herein, a "binder" is a film forming substance that holds other substances together. In some embodiments a "binder" includes a chemical substance in which a dye exhibits greater solubility to give high emissions.
As used herein, an "additive" is a substance that is added to another substance to in order to achieve a desired property.

Previous attempts to create a dynamic camouflage effect rely on chemical binders to fix the emissive dyes to the fabric. This is because the dyes used were insoluble or sparingly soluble in water and did not contain any groups capable of interacting/bonding with a specific fiber. This lack of functionality for directly binding to the fabric required the dyes be bonded to the fiber by the use of relatively high molecular weight binders, and various co-additives (fixing agents, etc.) that are incorporated into the fiber by one of many thermal processes. This resulted in stiff, rough, and harsh fabric not having a desirable "hand."

Printed CLC must have good adherence of the inks to the selected fabric to be commercially viable. If the emissive colorants selected have no affinity to the fabric, high molecular weight film forming binders are necessary, which adversely impact "hand." Hence, selecting dyes that will interact strongly with the fabric are preferable since the use of such dyes ensure good ink adherence to the fabric, while using lower amounts of binders and lower molecular weight binders resulting in a soft feel.

While there are technologies that can produce strong and soft fabrics without the use of a chemical binder for standard non-emissive colorants, these processes cannot in general be used for emissive colorants since the absence of some level of binder will lead to concentration quenching resulting from aggregation of the emissive colorant thus resulting in an insufficient "dynamic effect". The use of dyes that are strongly adhered to the fabric without any added polymeric binder will in general create an insufficient emissive component in the resulting color and brightness, resulting in an inadequate "dynamic effect".

For a given fabric, the first step is the proper selection of emissive colorant. As mentioned earlier it is preferable to select a dye class for a given fabric that will have propensity to bind to the fiber. Hence once a fabric is selected one has a choice amongst several dye classes such as acid dyes, basic dyes, disperse dyes, etc. (described below) that can be selected. For screening procedure examples 1-5 the dye selected is a disperse dye. It should be noted however that having selected a dye that has propensity to bind to fabric, selection confirmation can only be made by selecting and testing in conjunction with the complementary binder polymer (polymer in which the dye exhibits solubility to yield higher emissive component). This can be determined by coating the fabric with emissive colorant alone, but including surfactant and thickener for the contemplated polymer, and then overcoating with different binders to first determine suitable emissive colorant polymer pairs. Once a proper emissive colorant/binder pair has been selected, the emissive colorant is over coated with varying amounts of polymer to determine the operating band or region wherein one can have simultaneously good "dynamic effect" and at least an acceptable "hand."

The CLC includes at least a non-luminescent material, a luminescent material, and a binder, and optionally additives commonly used in the art and practice of textile printing and dyeing as long as such materials do not interfere with the dynamic effect as determined by the screening methodology outlined below. In cases described below, the use of a selected binder will improve the performance of the luminescent material, in which case its use if preferred. These components collectively provide a formulation that achieves acceptable levels of "dynamic effect" and fabric "hand" when applied to fabrics or textiles.

Luminescent and non-luminescent materials are selected to provide adaptive camouflage. As a camouflaged object moves from a dark environment to a brighter environment, an increase in camouflage effectiveness requires an increase in brightness, which can be achieved by converting non-visible radiation to visible and/or converting low photopic efficiency visible radiation to greater photopic efficiency visible radiation. This is accomplished through the use of luminescent or emissive materials.

Colorants that have propensity to bind to the fabric is an important step towards achieving good hand since it decreases the need for high molecular weight binders to adhere printed ink to binder. Binding of colorants to fabric is a function of the specific fabric that is the fabric class.

The U.S. Federal Trade Commission recognizes at least 13 classes of dyes. Each class of dye has a propensity to bind/interact with a specific fiber(s)/fabric(s). Within each class of dyes, emissive (fluorescent) materials exist that are suitable for use in preparing fabric which displays a dynamic camouflage effect as described in the publications above. Thus it is possible through the judicious use of the appropriate dye class to prepare inks, paints, etc. which will show an affinity to a desired fabric and consequently allow for the use of little or no binder.

A summary of the important dye classes and the fabrics they bind to is presented below.

Acid dyes are chromophores that have ionized negative acidic groups and most often contain the salts of sulfuric and carboxylic acids. In addition, dyes containing the ionizable phenolic moiety can also be classified as acid dyes. These negatively charged chromophores, when applied under mild acidic conditions, readily react with generated positive (cationic) sites on wool, silk, polyamide and synthetic Nylon fibers and leather.

Basic dyes are cationic or positively charged chromophores that react well with anionic or negatively charged fibers to produce strong ionic bonds. The cationic groups present on these colorants /chromophores usually take the form of positively charged amine groups. They are most often used to color acrylic fibers through the interaction with their negative sulphonate and/or carboxylate groups.

Direct dyes mainly are used to stain cellulosic fibers and do not require a mordant to fix the dye on the fiber. They are anionic dyes that can be used to dye wool and nylon fibers also. They are applied from salt-containing baths; the salt increases affinity and forces the equilibrium between dye in the bath and dye on the fiber in favor of the latter.

Disperse dyes are sparingly soluble in water and are applied as dispersions. Their transport from the dye bath to the fiber is in monomolecular dissolved form. They are used mainly for polyester and acetate fibers. Insoluble azo dyes are produced *in situ* by depositing a temporarily solubilized phenolic compound (naphthol) in the fiber and subsequently coupling the phenol with a diazonium salt. Such dyes are used primarily in the dyeing and printing of cellulosic fibers. Their use has declined sharply in the last decade.

Fiber-reactive dyes are anionic dyes containing a reactive group capable of forming a covalent bond with a compatible fiber group, e.g., typically the hydroxyl group of cellulose. It is the only class of dyes resulting in such a bond. Textiles dyed with fiber-reactive dyes exhibit excellent wet fastness. The use of fiber-reactive dyes is increasing.

Sulfur dyes have affinity for cellulosic fibers in an alkaline reducing bath. After oxidation on the substrate, these dyes are insoluble and fixed by being trapped inside the fiber. The shade range available with sulfur dyes is limited to muted colors. The primary application is for corduroys, work clothes, jeans, etc.

Vat dyes are applied in a similar manner as sulfur dyes. Insoluble in water, they are applied as dispersions and reduced in an alkaline bath, where they form the watersoluble leuco compound with an affinity for cellulosic fibers. They are insolubilized by oxidation and fixed to the substrate by entrapment. The printed dyes have excellent fastness properties.

Mordant dyes are a special group of acid dyes that undergo a chemical reaction with a metal atom, usually chromium. The mordant can be applied before the dye, together with the dye, or after the dye. In the first case, the fiber is impregnated with a solution of a salt of the mordanting metal. In the second case, dye and metal salt are applied together, and in the third case, the dye is first applied like any acid dye and then treated with the metal salt. Reaction with the metal changes the color of the dye and substantially improves fastness properties.

The luminescent materials include organic fluorescent materials or inorganic fluorescent materials. Preferred luminescent materials include C.I. Acid Yellow 7 (brilliant sulfaflavine, CAS Reg. No. 2391-30-2), TERASIL Flavine 10GFF (CAS Reg. No. 12221-32-5), Fluorescent Blue G, C.I. Acid Red 131 (CAS Reg. No. 12234-99-0), Synthrowite NWV, and C.I. Acid Violet 48. Additional luminescent materials that can be used in compositions include, but are not limited to, fluorescein isothiocyanate (FITC), 5,6-carboxymethyl fluorescein, Texas red (sulforhodamine 101 acid chloride, CAS Reg. No. 82354-19-6), coumarin, rhodamine, amino-methyl coumarin (AMCA), Eosin, Erythrosin, Cascade Blue(pyrenyloxytrisulfonic acid), Oregon Green(2',7'-difluorofluorescein, CAS Reg. No. 195136-58-4)), lissamine ([4-[4-(dimethylamino)-alpha-(2-hydroxy-3,6-disulphonato-1-naphthyl)benzylidene]cyclohexa-2,5-dien-1-ylidene]dimethylammonium inner salt sodium salt, CAS Reg. No. 3087-16-9), xanthenes, acridines, oxazines, phycoerythrin, Acid Fuchsin (Disodium 2-amino-5-[(Z)-(4-amino-3-sulfonatophenyl)(4-iminio-3-sulfonato-2,5-cyclohexadien-1-ylidene)methyl]-3-methylbenzenesulfonate, CAS Reg. No. 3244-88-0), Alizarin Red (1,2-dihydroxy-9,10-anthracenedione, CAS Reg. No. 72-48-0), Allophycocyanin, Aminocoumarin, Astrazon Brilliant Red 4G (CAS Reg. No. 12217-48-0), Astrazon Orange R (basic orange 21, CAS Reg. No. 3056-93-7), Astrazon Red 6B (basic violet 7, CAS Reg. No. 6441-82-3), Astrazon Yellow 7 GLL, Auramine, Aurophosphine, Brilliant Sulphoflavin FF, Calcien Blue (4-Methylumbelliferone-8-methyliminodiacetic acid, CAS Reg. No. 54375-47-2), Calcium Green, Calcofluor RW Solution, Cascade Yellow, CY3.1 8, CY5.1 8, Cyanine 7, Diphenyl Brilliant Flavine 7GFF (CAS Reg. No. 61725-08-4), Erythrosin isothiocyanate (CAS Reg. No. 90284-47-2), Euchrysin, Flazo Orange (1-(5-chloro-2-hydroxyphenylazo)-2-naphthol, CAS Reg. No. 3566-94-7), Fluorescamine (4-Phenylspiro-[furan-2(3*H*),1-phthalan]-3,3'-dione, CAS Reg. No. 38183-12-9), Fura-2 (CAS Reg. No. 113694-64-7), Genacryl Brilliant Red B, Genacryl Brilliant Yellow 10GF (CAS Reg. No. 71819-59-5), Genacryl Pink 3G, Genacryl Yellow 5GF, Leucophor PAF, Leucophor SF, Leucophor WS, Lissamine Rhodamine B200 (RD200), Lucifer Yellow CH (CAS Reg. No. 71206-95-6), Lucifer Yellow VS (CAS Reg. No. 71231-14-6), Magdala Red (CAS Reg. No. 18472-87-2), Marina Blue (1-[[(6,8-difluoro-7-hydroxy-4-methyl-2-oxo-2H-1- benzopyran-3-yl)acetyl]oxy]- 2,5-Pyrrolidinedione, CAS Reg. No. 215868-29-4), Maxilon Brilliant Flavin 10 GFF, Maxilon Brilliant Flavin 8 GFF, MPS (Methyl Green Pyronine Stilbene), Nuclear Fast Red (CAS Reg. No. 6409-77-4), Nuclear Yellow (Benzenesulfonamide, 4-[5-(4-methyl-1-piperazinyl)[2,5'-bi-1H-benzimidazol]-2'-yl] trihydrochloride, CAS Reg. No. 74681-68-8), Nylosan Brilliant Flavin E8G, Pacific Blue, Pararosaniline ([4-[Bis(4-aminophenyl)methylidene]-1-cyclohexa-2,5-dienylidene]azanium chloride, CAS Reg. No. 569-61-9), Phorwite AR Solution, Phorwite BKL, Phorwite Rev, Phthalocyanine, Phycoerythrin R, Polyazaindacene Pontochrome Blue Black, Porphyrin, Procion Yellow (CAS Reg. No. 59112-78-6), Pyronine, Pyronine B (CAS Reg. No. 2150-48-3), Pyrozal Brilliant Flavin 7GF, Rhodamine 123 (CAS Reg. No. 62669-70-9), Rhodamine 5 GLD, Rhodamine 6G (CAS Reg. No. 989-38-8), Rhodamine B (CAS Reg. No. 81-88-9), Rhodamine B 200, Rhodamine B Extra, Rhodamine BB, Rhodamine BG, Rhodamine WT, Sevron Brilliant Red 2B, Sevron Brilliant Red 4G, Sevron Brilliant Red B, Sevron Orange, Sevron Yellow L, sulpho Rhodamine B (CAS Reg. No. 3520-42-1), Sulpho Rhodamine G Extra (CAS Reg. No. 5873-16-5), Thiazine Red R (CAS Reg. No, 2150-33-6), Thioflavin S (CAS Reg. No. 1326-12-1), Thioflavin TCN (CAS Reg. No. 2390-54-7), Thioflavin 5Thiozol Orange, and Xylene Orange (CAS Reg. No. 3618-43-7).

Under low ambient light levels, the luminescent material minimally emits a lower energy wavelength. Thus, the defined color and brightness produced are as a result of this emitted lower energy wavelength combined with the unabsorbed electromagnetic radiation from the non-luminescent material that is reflected, scattered, etc. On the other hand, under increased ambient light levels, the luminescent material emits a higher amount of lower energy wavelength resulting in either a perceived similar color with increased brightness or a different color and brightness that encompass both this lower energy wavelength along with the unabsorbed electromagnetic radiation from the non-luminescent material that is reflected, scattered, etc. It should be noted that the contribution of the emissive colorant will also be dependent upon the spectrum of the incident electromagnetic radiation, that is in the degree of overlap of the ambient radiation and the absorption spectrum of the emissive colorant. This will also cause the CLC to respond to different daylight spectrum such as at dawn versus noonday sun. Thus, the perceived color and brightness of the overall pattern produced under increased ambient light levels can be either a similar color with increased brightness or a different color and brightness than that produced under low ambient light levels. In addition, this differing of color and brightness under high ambient light levels can alter the frequency of the overall pattern under the same ambient light conditions by way of merging and/or filling of one or more portions of the pattern. In the instance wherein the chromatic luminescent composition includes more than one luminescent material, it is also possible for the luminescent components to engage in either energy transfer or electron transfer among each other following their absorption of light when exposed to increased ambient light levels.

The non-luminescent materials can be organic non-fluorescent materials or inorganic non-fluorescent materials which are well known to those skilled in the art of dyeing and printing of textiles. At least one of the non-luminescent materials included in the CLC has an absorption spectrum that at least partially overlaps with the spectrum of the incident electromagnetic radiation.

Non-luminescent materials can be provided that exhibit a preferred binding to specific types of fibers. These non-luminescent materials are well known to those versed in the art of providing coloration to both synthetic and natural fibers. A partial list follows which is to be used only as an example and is not to be considered as limiting in any way. For instance, acid dyes such as # 405 Deep Purple, #411 Deep magenta, and # 424 true turquoise from Dharma Trading Co. can be used to color protein fibers like wool, angora, cashmere and silk. Other acid dyes are available from Jacquard including #602 Bright yellow, # 617 cherry Red and #623 brilliant Blue. In addition, dyes like C.I. Acid Blue 45 (CAS Reg. No. 2861-02-1), C.I. Acid Red 138 (CAS Reg. No. 15792-43-5), Acid Black 172 (CAS Reg. No. 61847-77-6), C.I. Acid Red 74 (CAS Reg. No. 6300-18-1) can also be used. Examples of basic dyes that can be used to bind to acrylic and other fibers containing structural anionic groups include C.I. Basic yellow 28 (CAS Reg. No. 54060-92-3), C.I. Basic blue 8 (CAS Reg. No. 2185-87-7), C.I. Basic Red 9 (pararosaniline, CAS Reg. No. 569-61-9), and C.I. Basic Green 4 (CAS Reg. No. 569-64-2). Non-luminescent direct dyes with substantivity for cellulosic fibers are plentiful. 75% of all direct dyes are unmetallized azo-structures, a great majority of which are diazo or polyazo types. Examples include C.I. Direct Red 80 (CAS Reg. No. 2610-10-8), Mordant Yellow 3 (CAS Reg. No. 6054-97-3), Mordant Red 26 (CAS Reg. No. 6360-12-9), Mordant Orange 6 (CAS Reg. No. 3564-27-0), C.I. Direct Blue 67 (CAS Reg. No. 3354-97-0), C.I. Direct Orange 72 (CAS Reg. No. 12217-64-0), C.I. direct Red 83 (CAS Reg. No. 15418-16-3). Disperse dyes such as #D118 Bright Yellow, # D360 Bright Red, #D459 Bright Blue, and #D885 Lilac from Pro Chemical and Dye can be used to dye polyester and polyacetate synthetic fibers. Others include C.I. Disperse yellow 3 (CAS Reg. No. 2832-40-8), C.I. Disperse Red 7 (CAS Reg. No. 4540-00-5), C.I. Disperse Blue 7 (CAS Reg. No. 3179-90-6), C.I. Disperse Red 60 (CAS Reg. No. 12223-37-9), C.I. Disperse Red 91 (CAS Reg. No. 12236-10-1) and C.I. Disperse Blue 165 (CAS Reg. No. 41642-51-7). Examples of non-luminescent fiber reactive dyes that form a covalent bond with cellulosic fibers like cotton include the Procion MX dyes such as C.I. Reactive Yellow 86 (CAS Reg. No. 61951-86-8), C.I. Reactive Orange 4 (CAS Reg. No. 12225-82-0), C.I. Reactive Red 11 (CAS Reg. No. 12226-08-3), C.I. Reactive Red 195 (CAS Reg. No. 93050-79-4), C.I. Reactive Violet 14 (CAS Reg. No. 12270-88-1), and C.I. Reactive Blue 163 (CAS Reg. No. 72847-56-4). Companies like ALJO Mfg. Co., Batic Oetoro, Jacquard , and Pro-chemical and Dye, provide a wide Range of non-luminescent Acid, Basic, Direct, Disperse and fiber reactive Dyes.

Binders can be classified into several categories based on polymeric (binder) chemical structure and functionality. Binders can also be formed *"in situ"* on the fabric following the curing of monomers (non-woven fabrics) or they can consist of the application of a large variety of latex polymers dispersed in an aqueous medium. The latex dispersion can also carry surfactants, stabilizers, and other necessary additives. Their chemical compositions not only influence hardness and softness, but also glass transition temperature (Tg), hydrophobicity and hydrophilicity, elasticity, aging, and dry tensile strength. The acrylic latex binders offer the greatest durability, color stability and dry/wet performance. These acrylic binders have a wide range of fabric "hand" properties and can be formulated to vary from soft (Tg = -40°C) to extremely hard (Tg = 105°C).

In some embodiments the binders include polyether or polyester polyurethane binders such as SOLUCOTE 1050 and PERMAX 232. However, other binders can be employed including, but not limited to, acrylates such as CRESACRYL 120 TR or Polyvinyl butyral resins such as BUTVAR B-72.

Besides aiding in the overall binding of colorants to the fabric, the binder(s) can also be used to contribute and convey numerous properties that are necessary for the performance of the fabric, including but not limited to wash fastness, fire resistance, water repellency, etc. The type and quantity of a binder can have a dramatic effect on hand: too much binder results in a fabric that feels rough or hard/stiff; too little results in loss of wash fastness. Given these important roles that the binder plays in creating a commercially viable textile, and further since increasing binder amounts enhances the "dynamic effect", suitable binders must be selected for a specific emissive colorant and suitable ratios thereof that yield higher emissive component and which lead to acceptable "dynamic effect" and fabric "hand."

The luminescent material and binder included in the CLC are in a ratio as determined by the screening methodology outlined below for a specific luminescent colorant and binder pair. The ratio of binder to luminescent material included in the CLC is in the range from 3.8:1 to 10:1.

Additives that can be used in the compositions include dispersants, thickeners and/or defoamers. Employing additives such as solubilizers, plasticizers, fixing agents, cross-linkers and surfactants can extend the versatility of the binders in order to achieve the desired "hand." In some embodiments, the additives include PLURONIC 10R5, ALTOMA 1972 and CELLOSIZE ER400 (CELLOSIZE ER 4400 is a medium molecular weight, enzyme-resistant hydroxyethyl cellulosic polymer). Other useful additives include, but are not limited to, wetting agents, softening additives, surfactants, waterproofing additives, thickeners, defoaming and deaerating agents which are well known to those skilled in the art and commonly used for textile dying and/or printing inks Such materials must be screened to determine that they do not interfere with the function of the luminescent materials being employed.

The CLCs are applied to materials such as clothing, tents, weapon and vehicle covers, netting, parachutes, and other fabrics, textiles, and coverings to form CLTs. In some embodiments, the support structure is a textile, used to make a chromatic LCT. While in some embodiments the textile material is a nylon/cotton blend fabric in a 50:50 ratio, additional textile materials which can be used to make the chromatic LCT include, but not limited to, natural fibers such as cotton, linen, cellulose, hemp and jute, silk, and wool, synthetic fibers such as polyesters, polyethylenes, acrylics, nylons, polypropylenes, and others, such as DACRON (polyethylene terephthalate), blends of ORION (acrylic fiber), RAYON, 1NOMEX, KEVLAR, KERNEL, and SPANDEX, and blends, composites, and laminates thereof.

The CLC modulates color, brightness and/or frequency through absorption and emission as a function of incident electromagnetic radiation, while maintaining the "hand" of a textile material that includes the CLC. Achieving good "hand" with the binder type and concentration is facile to those skilled in the art when working with non- emissive (absorptive) colorants. However, the same is not true for achieving an acceptable "hand" concurrent with a good "dynamic effect" when using emissive colorants. This is because these emissive colorants exhibit concentration quenching: the higher the dye concentration, the greater the tendency for dye molecules to aggregate and hence be prone to concentration quenching. Thus, a high binder amount with resultant higher solubility of emissive colorant (lower dye concentration) will lead to high levels of emissive radiation which will create a large dynamic effect. Unfortunately, the consequence of higher amounts of binder is that this will cause the fabric "hand" to be poorer. Conversely, too little binder will result in a very good "hand," but an unacceptable "dynamic effect" as a result of emissive colorant aggregation leading to emission (fluorescence) quenching.

As demonstrated by the Screening Procedure examples 1-4, for a given emissive colorant/binder system, the operating region of acceptable "dynamic effect" and fabric "hand" is readily determined. While the degree of impact on human perception of "dynamic effect" can be performed by visual observation of color and brightness change in a light box with different light sources, the "dynamic effect" can be quantitatively measured by generating CIE Lab data.

To achieve acceptable dynamic effect and good fabric hand when using luminescent materials in conjunction with non-luminescent materials, in combination with good adherence of the printed ink to the fabric, it is important to select colorants that adhere to the fabric, luminescent colorant binder pairs such that the luminescent material forms a solid state solution with the binder polymer (necessary for good emission), and other additives that do not interfere with the functioning of the luminescent material, and to minimize the amount of binder added.

The following measurement methods can be utilized to determine the adequacy of fabric "hand". The concept of fabric "hand" or "handle" is used for the sensorial evaluation of textiles. While "hand" (or handle) has been defined in a variety of ways, in a broad sense it refers to the total sensations experienced when a fabric is touched or manipulated in the fingers. It implies the ability of the fingers to make a delicate and discriminating appraisal in conjunction with the mind resulting in a single valued judgment. Efforts to quantify hand using various analytical techniques instead of the historically subjective methods have not led to a standard universal method of evaluation. One confounding factor is that different cultures experience/evaluate the sensation of hand differently. The consumers' perception of the usefulness of a product is greatly influenced by "hand" and has a direct effect on the commercial success of apparel, etc. This fabric property is understood to be critical to manufacturers, garment designers, and merchandisers in developing and selecting textile materials especially the textiles used in apparel. Many factors can contribute to fabric hand including differences in the fiber, yarn, and fabric. Additionally, processing procedures can have a dramatic effect on "hand." These include processes such as wet processing and chemical finishing, mechanical finishing and refurbishing.

For purposes of quantifying the measurement of "hand," the feel, texture and drape of the printed material were compared directly with those of the unprinted fabric. The "hand" is judged to be excellent when the properties are indistinguishable from the unprinted material. When only a slight difference can be detected in the feel, texture, or drape the "hand" is characterized as good. If a slight difference in two of the tactile properties could be detected, the "hand" was judged to be acceptable. If the difference in any of the tactile properties was significant or the feel, texture and drape were all slightly affected, then the hand was labeled as poor.

A commercially available Greytag MacBeth Spectrolino instrument implementing the CIE Lab 1976 coordinates was employed for measuring "dynamic effect". This method is well known to those versed in the art.

For a given colorant, the complete ink fluids with different polymers and all of the other additives such as surfactants and thickeners can be manufactured with binder amounts selected at different concentrations, and then both the fabric "hand" and the "dynamic effect" evaluated. However, it was found that the overall effort can be reduced if the upper and lower bounds of the emissive component ("dynamic effect") and the resulting "hand" were first determined. Hence, the selected dye was first coated, preferentially selecting colorants which bind to the fabric without any binder. Next, the strength of the "dynamic effect" and the fabric "hand" were assessed by measuring the luminance intensity (fluorescence) in a fluorescence spectrophotometer. The excitation frequency is in the wavelength of the region that needs to be converted to create the "dynamic effect." This is used to determine the lower level or lower bound of the emissive component and the corresponding "hand" is used to determine the upper bound for the printed fabric "hand." The "hand" was then determined by running the printed fabric through the fingers.

Initial screening of the emissive colorant without binder should also include a suitable surfactant that is compatible with the contemplated binder and also a thickener, which is also dependent upon contemplated binder that will be necessary for building viscosity for screen printing. This is because these additives can impact the magnitude of the emissive component. The material is then coated with different amounts of the selected polymer over the emissive colorant coating. This enables one to determination of the maximum or upper bound of the emissive component and the lower bound of the attained hand.

The following non-limiting examples (examples 1-4) illustrate screening methodologies for selecting colorant, binder and determining operating region of luminescent component binder ratio that yield acceptable hand, dynamic effect and good adherence of colorant to fabric.

### Comparative Example 1. Testing the suitability of the TERASIL FLAVINE 10GFF-PERMAX 232 dye-binder pair

### Materials and Methods

For testing the suitability of the TERASIL Flavine 10GFF-PERMAX 232 dye-binder pair, a 1% solution of TERASIL Flavine Yellow 10GFF was dissolved in water along with PLURONIC 10R5 to help with solubility. To this solution was added ALTOMA 1972 at 1.5% of the total to thicken it for printing.

This ink was then applied to a white NYCO fabric using screening printing and a 120-mesh screen. NYCO is a woven fabric including a 50:50 blend of nylon and cotton. Subsequently, the coatings above were overcoated with different amounts of PERMAX 232 binder. An appropriate amount of PERMAX 232 binder was added to the aliquots of the formulation to achieve a 5%, 10%, 20% and 30% binder concentration in the ending solutions. Both the emissive component and fabric "hand" were evaluated. The "dynamic effect" was initially gauged by measuring emissive component in a fluorescence spectrophotometer. the excitation was done at 470 nm to cascade the blue wavelength region to yellow/red region.

### Results

The data are shown in Table 1 below.

**Table 1: Effect of Binder Emissive: Colorant Ratio**

| **Excitation at 470 nm, λmax** = **518.6 nm** | | | |
|---|---|---|---|
| **Sample** | **Binder Fluorescence Texture to dye ratio** | | |
| Emissive colorant only with no binder | | 3272 a.u. | excellent hand |
| Binder emissive colorant ratio | 5:1 | 3469 a.u. | good hand |
| Binder emissive colorant ratio | 10:1 | 4628 a.u. | acceptable hand |
| Binder emissive colorant ratio | 20:1 | 3874 a.u. | poor hand |
| Binder emissive colorant ratio | 30:1 | 6960 a.u. | poor hand |

### Example 2. Testing the suitability of the TERASIL FLAVINE 10GFF-SOLUCOTE 1050

### Materials and Methods

Similarly for testing the suitability of the TERASIL FLAVINE 10GFF-SOLUCOTE™ 1050 dye-binder, a solution of the emissive colorant TERASIL FLAVINE 10GFF was prepared with 1.5% CELLOSIZE ER4400 thickener and then coated/printed on a NYCO fabric. After drying and evaluation of "hand" and emissive component, this coated fabric was then overcoated with various amounts of SOLUCOTE 1050 binder and the emissive component (converted radiation, that is, fluorescence amount) and hand of each coating was measured and evaluated as described in Example 1.

### Results

The results are shown in Table 2.

**Table 2: Effect of Binder Emissive:Colorant Ratio**

| **Excitation at 470 nm, λmax = 518.6 nm** | | | |
|---|---|---|---|
| **Sample** | **Binder to Fluorescence Texture dye ratio** | | |
| Emissive colorant only with no | | | excellent hand |
| Binder (comparative) | | 4240 a.u. | |
| Binder emissive colorant ratio | 3.8:1 | 5256 a.u. | good hand |
| Binder emissive colorant ratio | 7.5:1 | 5791 a.u. | acceptable hand |
| Binder emissive colorant ratio | 15:1 | 5862 a.u. | poor hand |
| Binder emissive colorant ratio | 30:1 | 6940 a.u. | poor hand |
| Binder emissive colorant ratio | 30:1 | 8325 a.u. | poor hand |

The data in Tables 1 and 2 show that the emissive component for the TERASIL FLAVINE 10GFF-PERMAX 232 dye-binder pair is lower than that for the TERASIL FLAVINE 10GFF-SOLUCOTE 1050 dye-binder pair. Even without the presence of a binder in the coating the associated additives for the PERMAX 232 binder depress the emissive component. Thus with no binder, the TERASIL FLAVINE 10GFF-PERMAX 232 dye-binder pair has an emissive component of 3272 a.u. and the TERASIL FLAVINE 10GFF-SOLUCOTE 1050 dye-binder pair has an emissive component of 4240 a.u. It should be noted that even in the absence of the binder the emissive colorant alone without binder has a different emissive component. This is because as suggested above one should include the auxiliary agents such as thickner and surfactant for the screening which as shown in this case do impact the emissive component.

The data show that whereas for the TERASIL FLAVINE 10GFF-PERMAX 232 dye-binder pair, at a binder/emissive colorant ratio of 10:1 the emissive component contribution is only 4628 a.u., for the TERASIL FLAVINE 10GFF-SOLUCOTE 1050 dye-binder pair even at a lower binder/emissive colorant ratio of 7.5/1 the emissive component is approximately 25% higher at 5791 a.u. Thus, the TERASIL FLAVINE 10GFF-SOLUCOTE 1050 dye-binder pair is preferable to the TERASIL FLAVINE 10GFF-PERMAX 232 dye-binder pair.

Referring to Table 2 above, whereas the emissive colorant alone (no binder) gave a low emissive component (4240 a.u.) resulting from concentration quenching (high dye concentration), the fabric exhibited very good "hand." The emissive colorant layer was then over coated with different binder amounts to result in varying amounts of binder emissive component ratios. The results show that the higher the binder/emissive colorant ratio the higher the emissive contribution to the final color and brightness. Thus, a binder emissive colorant ratio of 60/1 increased the emissive component from 4240 a.u. to 8325 a.u. At this high binder loading, the fabric "hand" was unacceptable. The binder/emissive colorant ratios varying between the ranges of 7.5/1 to 3.8:1 gave acceptable "hand" and an emissive component greater than 5000 a.u., which was higher than the lowest emissive component by approximately 25%.

Referring to Table 2, the data show that the emissive colorant alone (no binder) gave a low emissive component (4240 a.u.) resulting from concentration quenching. However, because of the absence of a polymeric binder, the fabric exhibited very good "hand." The emissive colorant layer was then overcoated with polymer solutions of different concentrations to arrive at varying amounts of polymer/dye ratios. The higher the polymer dye ratio, the higher the emissive contribution to the final color and brightness. Thus, a polymer dye ratio of 60:1 increased fluorescence yield from 4240 a.u. to 8325 a.u. At this high polymer loading, the fabric hand is unacceptable. The data show that polymer/emissive colorant ratios varying between ranges of 7.5:1 to 3.8:1 gave acceptable hand as well as an emissive component greater than 5000 a.u., which is higher by approximately 25% than the lowest emissive component. For a given emissive colorant polymer system one is then quickly able to determine the operating region of acceptable dynamic effect" and fabric "hand". The measurement of fabric "hand" is described above. The dynamic camouflage effect can be measured by generating C.I.E data.

### Example 3. Optimization of Binder: Emissive Colorant Ratio

After the selection of appropriate pairs of emissive colorants and binders for a given fabric, and having determined the operating region wherein both acceptable "dynamic effect" and fabric "hand" are achieved, the results cited above were tested by preparing the full formulations of printing ink containing all of the ingredients and measuring both the "dynamic effect" and "hand." The confirmation experiments can be targeted to the region of the operating range determined above.

### Materials and Methods

A 1% solution of TERASIL FLAVINE Yellow 10GFF was dissolved in water along with PLURONIC 10R5 to help with solubility. To this solution was added CELLOSIZE ER4400 at 1.5% of the total to thicken it for printing. This formulation was then applied to the white NYCO fabric using a 120 mesh screen and standard screen printing methods. An appropriate amount of SOLUCOTE 1050 binder was added to the aliquots of the formulation to achieve a 5%, 10% and 20% binder concentration in the ending solutions.

**Table 3: Optimization of Binder:Emissive Colorant Ratio**

| **Excitation at 470 nm, λmax = 519.2 nm** | | | |
|---|---|---|---|
| **Sample** | **Binder to dye ratio** | **Fluorescence** | **Texture** |
| Binder:emissive colorant ratio (comparative) | 5:1 | 3985 a.u. | good hand |
| colorant ratio | 10:1 | 5716 a.u. | good hand |
| Binder:emissive colorant colorant ratio | | | |
| Binder:emissive colorant ratio | 20:1 | 6114 a.u. | poor hand |

It was shown in Table 2, by employing the screening method that binder/emissive colorant ratios in the range 3.8:1 to 7.5:1 would give both acceptable "dynamic effect" and fabric "hand." Preparing the actual formulations of the selected emissive dye and binder showed that a binder /emissive colorant ratio of around 10 resulted in both acceptable "dynamic effect" of 5716 a.u. and fabric "hand."

### Comparative Example 4. Selecting a suitable emissive colorant for a given polymer

It is also important to select the appropriate emissive colorants. There are emissive colorants that create a low level of emissive component even with incorporation of high binder amounts. It can be difficult with such colorants to find a satisfactory operating region wherein both "dynamic effect" and fabric "hand" are acceptable. This is demonstrated in the example cited below.

### Materials and Methods

A 1% solution of Lemon Yellow dye from ARJO was dissolved in water along with PLURONIC 10R5 to help with solubility. To this solution was added CELLOSIZE ER4400 at 1.5% of the total to thicken it for printing. This ink was then applied to the white NYCO fabric using a 120 mesh screen and standard screen printing methods. An appropriate amount of SOLUCOTE 1050 binder was added to the aliquots of the formulation to achieve a 5%, 10% and 20% binder concentration in the ending solutions.

### Results

**Table 4: Effect of Emissive Colorant to Binder Ratio**

| **Excitation at 470 nm, λmax = 501.6 nm** | | |
|---|---|---|
| **Sample** | **Binder to dye ratio** | **Fluorescence** |
| Emissive colorant only with no binder | | 880 a.u. |
| Binder emissive colorant ratio | 5:1 | 868 a.u. |
| Binder emissive colorant ratio | 10:1 | 882 a.u. |
| Binder emissive colorant ratio | 20:1 | 966 a.u. |

Referring to Table 4, the coating including only emissive colorant showed a low emissive output. Whereas the emissive output was 4240 a.u. for the TERASIL FLAVINE 10GFF-SOLUCOTE 1050 dye-binder additives, as shown in Table 2, the emissive output was only 880 a.u. for the Lemon Yellow emissive colorant from ARJO. Increasing the binder amount increased the TERASIL FLAVINE 10GFF emissive output to greater than 6000 a.u. Increasing the binder amount for the Lemon Yellow emissive colorant the only increased the emissive output to 966 a.u.

The emissive colorant is selected to include one or more emissive colorants (or inorganic emitters) of appropriate wavelength arranged in such a way as to effectively ensure efficient energy transfer from one emissive colorant of higher energy to one of lesser energy and thus modulate not only color but brightness as a function of the amount of converted radiation in response to the ambient light intensity and composition.

It is possible to have a certain region of the textile exhibiting a specific color and brightness change as a function of incident electromagnetic radiation, while another portion of the textile remain static. Furthermore, following this specific color and brightness change, another region of the textile can undergo an alteration in frequency as a result of the specific color and brightness change. Thus, one or more regions throughout the chromatic luminescent textile can behave differently and/or concurrently in order to produce the overall desired effect of the textile.

The CLC modulates color, brightness and/or frequency through absorption and emission as a function of incident electromagnetic radiation, while maintaining the "hand" of a textile material that includes the CLC as compared to a textile material that does not include the CLC. This is accomplished by mixing at least one non-luminescent material, at least one luminescent material and at least one binder. Additional materials such as polymers or additives (thickeners, defoamers, dispersants, etc.), can also be included. The luminescent material and binder are mixed in a ratio as determined through the screening methodology described above for each luminescent material and binder combination. The ratio of binder to luminescent material is included in the CLC is in the range from 3.8:1 to 10:1. The method includes selecting at least one non-luminescent material that has an absorption spectrum that at least partially overlaps with the spectrum of the incident electromagnetic radiation.

In some embodiments the percent ratios of non-luminescent/luminescent materials included in the CLC, range from 2:90% to 20:80%.

To make the chromatic CLT, the CLC is incorporated onto or into one or more portions of the textile material using methods known in the art. In some embodiments, the CLC is applied onto the fabric surface using screen printing. The CLC can be applied to one portion of the textile material and another chromatic luminescent composition (i.e., including different components) can be applied to another portion of the textile material so that different areas of the textile material can contain different CLCs that change color and brightness in order to create the appropriate overall effect of the chromatic luminescent textile. Waterborne binders are applied by spraying, saturation, print, and foam methods depending on the properties required of the intended fabric usage.

The CLC can be applied to the fabric through a variety of printing and dying methods well known to those versed in the art. Examples of these that are commonly practiced are screen printing, either by flat screen or by rotary screen; ink jet printing; saturation coating; spray coating; vat dyeing or any combination of the above printing methods. Additionally, the CLC can be applied to a transfer coating through any number of printing methods commonly known in the art such as ink jet printing or screen printing and heat transferred to the fabric. The means of application has an impact on the selection of the type of binders and additives used, and thus the necessity for the screening method to ensure the efficiency of the luminescent materials as well as the preservation of the fabric hand.

Additionally, the materials comprising the CLC can be applied to coatings of polyvinyl acetal resins and/or polyvinyl butyral resins via screen printing or ink jet for use in transfer printing onto the textile.

The chromatic luminescent composite structures can be used, for example, by civilian outdoorsmen (hunting, camping, etc.), military forces, commercial industries, for camouflage purposes, and with respect to the textiles, additionally, with acceptable sensorial comfort ("hand"). For example, such chromatic luminescent compositions can be used with textiles for the fashion and cosmetic industries, as well as the decorative markets. Moreover, the ability to change the visual appearance, that is color and brightness, and, if desired, frequency, of a textile such as accent stripes or entire regions of a textile, as the environmental lighting changes, can have substantial commercial appeal. In addition, such chromatic luminescent compositions can also be used with textiles to provide a camouflage system for consumer, military or industrial applications.

The treated materials have the advantage that they will change color as the ambient brightness changes, for example, when moving from sun into shade, or outside into inside. This makes the camouflage much more effective.

The following non-limiting examples exemplify approaches to make ink formulations wherein both color and brightness are achieved by a combination of an emissive component emanating from emissive colorants and a reflective component emanating from absorptive components, which when printed on textile fabric achieve both acceptable dynamic effect and fabric "hand." The fabric "hand" evaluation data presented below was determined by running the fabric through the fingers. The dynamic effect was measured using the CIE system

### Example 5. Printed Fabrics made using Mixed Color Formulation 1

### Materials and Methods

Solutions of the following dyes were prepared by premixing each dye with PLURONIC 10R5 to help with solubility and dissolving to 1% dye solution in water: C.I. Acid Blue 93 (absorptive colorant), C.I. Acid Yellow 7 (emissive colorant), TERASIL FLAVINE Yellow 10GFF (emissive colorant), and Fluorescent Blue G (emissive colorant from ARJO). The solutions of the premixed dyes were added to a fixed amount of NEOCRY1 A-622 binder resulting in a binder to emissive colorant ratio of 4.8:1 and subsequently blended together. CELLOSIZE ER-4400, a hydroxyethyl cellulose thickener, was added to obtain a thickness appropriate to screen print the formulation. The resultant formulation included the following are shown below.

The combined solution was mixed for 90 minutes to fully dissolve the CELLOSIZE ER-4400 and to produce the dye. The dye, called formulation 1, was then printed on a nylon/cotton blended fabric as a solid square printed patch using screen printing. The printed fabric was dried in a high temperature oven at 180°C for ten minutes to set the dye and binder.

### Ingredients:

| | |
|---|---|
| NeoCryl A-622 | 2.0 grams |
| 1% solution of C.I. Acid Blue 93 | 5.12 grams |
| 1% solution of C.I. Acid Yellow 7 | 19.2 grams |
| 1% solution of TERASIL Flavine | 12.81 grams |

| Yellow 10GFF | |
|---|---|
| 1% solution of Fluorescent Blue G | 5.12 grams |
| CELLOSIZE ER-4400 | 0.903 grams |

The printed fabric was measured for tactile feel and softness by running the fabric through the fingers, as well as for color using a Greytag MacBeth Spectrolino spectrometer under both daylight conditions having a color temperature of 6504K (D₆₅) and under horizon lighting having a color temperature of 5003K (D₅₀) to document the effect of the changing light spectrum on the color of the fabric.

### Results

Referring to FIG. 1, when moving from daylight to shade, a color shift from greener to redder is observed along the x-axis, while another lesser change in color shift from yellower to bluer in the y-axis. These results show the direction and magnitude of the color changes when moving from daylight to shade. The results showed a significant change in color going from a bright yellow-green color to a medium green color. Referring to the data below for formulation 1, the color expression shifted more than 5 points a* (CIELab) towards red and the luminosity (L*) value changed over 1.3 points lighter.

**Table 4: Formulation 1 Analysis**

| **Formulation** | | **L*** | **a*** | **b*** | **dE*** |
|---|---|---|---|---|---|
| **1** | **D₆₅ (daylight)** | 64.29 | -30.81 | 52.97 | |
| | **D₅₀ (horizon)** | 65.65 | -25.67 | 52.28 | |
| | **Delta** | 1.36 | 5.14 | -0.69 | 5.36 |

Collectively, the results from the tactile feel and the Greytag MacBeth Spectrolino spectrometer confirmed the manufacture of an ink formulation that when printed on a fabric, produced a printed fabric that responded to ambient lighting environments, while still possessing a tactile feel and softness of hand that were indistinguishable from the unprinted fabric.

### Example 6. Printed Fabrics made using Formulation 2

### Materials and Methods

1% solutions of the following dyes were prepared in the same manner as described in Example 1: C.I. Acid Blue 93 (absorptive colorant), C.I. Acid Yellow 7 (emissive colorant), C.I. Acid Red 131 (emissive colorant), Synthrowite NWV (emissive colorant obtained from Organic Dyestuffs Corporation), and Fluorescent Blue G (emissive colorant obtained from ARJO). The solutions of the dyes were added to NEOCRYL A-622 as in Example 6 to achieve a binder to emissive colorant ratio of 4.3:1. CELLOSIZE ER-4400 was added to achieve a viscosity suitable for screen printing. The resultant formulation included the following:

### Ingredients:

| | |
|---|---|
| NeoCryl A-622 | 0.86 grams |
| 1% solution of C.I. Acid Blue 93 | 0.524 grams |
| 1% solution of C.I. Acid Yellow 7 | 10.48 grams |
| 1% solution of C.I. Acid Red 131 | 3.94 grams |
| 1% solution of Synthrowite NWV | 3.94 grams |
| 1% solution of Fluorescent Blue G | 1.32 grams |
| CELLOSIZE ER-4400 | 0.903 grams |

The combined solution was mixed as described above to achieve a dye, called formulation 2. The dye was printed on a nylon/cotton blend fabric using a 120-mesh screen and dried as described above.

The finished printed fabric was measured for tactile feel and softness, as well as for color as described above. The tactile feel and softness of hand of the printed fabric were indistinguishable from that of the unprinted fabric. Referring to FIG. 2, a color shift from greener to redder was observed along the x-axis, while another lesser change in color shift was observed along the y-axis from yellower to bluer. These changes illustrated the direction and magnitude of the visual color change when moving from daylight to shade. Referring to the data below for formulation 2, the results demonstrate a significant color change in the CIELab a* axis of 3.74 points towards the red under the horizon lighting (D₅₀) with little change in the L* value and a slight shift yellow (less than 0.7 points). Visually the sample changed from a neutral beige color under the Horizon (D₅₀) light to a yellowish green color under daylight (D₆₅) conditions.

**Table 5: Analysis of Formulation 2**

| **Formulation** | | **L*** | **a*** | **b*** | **dE*** |
|---|---|---|---|---|---|
| **2** | **D65 (daylight)** | 53.5 | 3.03 | 30.32 | |
| | **D50 (horizon)** | 53.76 | 6.77 | 30.97 | |
| | **Delta** | 0.26 | 3.74 | 0.65 | 3.80 |

Taken together, the results from the tactile feel and softness, as well as the color experiments confirmed the manufacture of an ink formulation that when printed on a fabric, produced a printed fabric that responded to ambient lighting environments, while still possessing a tactile feel and softness of hand that were indistinguishable from the unprinted fabric.

### Example 7. Printed Fabrics made using Formulation 3

### Materials and Methods

1% solutions of the following dyes were prepared in the same manner as described above: C.I. Acid Blue 93 (absorptive colorant), C.I. Acid Yellow 7 (emissive colorant), and C.I. Acid Red 131 (emissive colorant). The solutions of the dyes were added to SOLUCOTE 1050 and the resultant formulation was prepared following the approach in Example 1 to achieve a binder to emissive colorant ratio of 3.9:1. CELLOSIZE ER-4400 was added to achieve a viscosity suitable for screen printing. The final formulation was as follows:

### Ingredients:

| | |
|---|---|
| SOLUCOTE 1050 | 2.0 grams |
| 1% solution of C.I. Acid Blue 93 | 9.6 grams |
| 1% solution of C.I. Yellow 7 | 38.4 grams |
| 1% solution of C.I. Acid Red 131 | 2.88 grams |
| CELLOSIZE ER-4400 | 1.08 grams |

SOLUCOTE 1050 is a solvent borne polyurethane sold by DSM.

The formulation was mixed as described above to achieve a formulation called formulation 3. The dye was printed on a nylon/cotton blend fabric using screen printing with a 120-mesh screen. The printed fabric was dried.

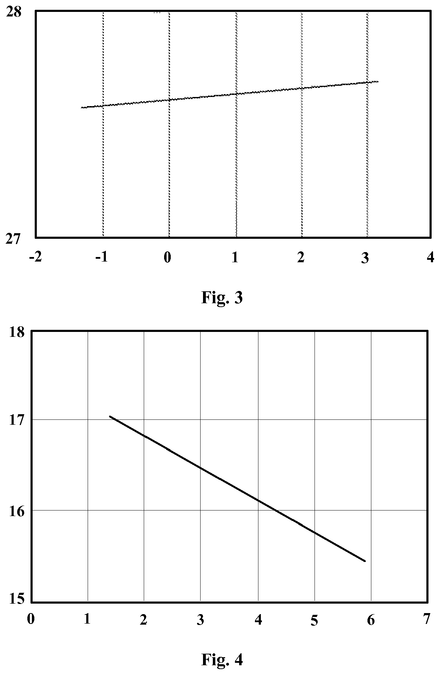

The finished printed fabric was measured for tactile feel and softness, as well as for color in the same manner as outlined above. The tactile feel and softness of hand of the printed fabric were indistinguishable from that of the unprinted fabric. Referring to FIG. 3, a color shift from greener to redder was observed along the x-axis with an insignificant change in the color shift along the y-axis, illustrating the direction and magnitude of the visual color change when moving from daylight to shade. Visually, the sample demonstrated a medium tan color under horizon (D₅₀) lighting and was green under daylight (D₆₅) lighting. Referring to the illustration below for formulation 3, the color shift was over 4.6 points in the a* value and almost -0.7 points in the b* value from daylight to horizon lighting with little change in the L* value.

Taken together, the results from the tactile feel and softness, as well as the color experiments, confirmed the manufacture of an ink formulation that when printed on a fabric, produced a printed fabric that responded to ambient lighting environments, while still possessing a tactile feel and softness of hand that were indistinguishable from the unprinted fabric.

**Table 6: Analysis of Formulation 3**

| **Formulation** | | **L*** | **a*** | **b*** | **dE*** |
|---|---|---|---|---|---|
| **3** | **D65 (daylight)** | 58.15 | 3.91 | 28.46 | |
| | **D50 horizon)** | 58.45 | 8.57 | 27.78 | |
| | **Delta** | 0.3 | 4.66 | -0.68 | 4.72 |

### Example 8. Printed Fabrics made using Formulation 4

### Materials and Methods

1% solutions of the following dyes were prepared in the same manner as described above: C.I. Acid Blue 93 (static or absorptive colorant), C.I. Acid Yellow 7 (emissive colorant), and TERASIL Flavine Yellow 10GFF (emissive colorant) C.I. Acid Violet 48 (emissive colorant) and C.I. Acid Red 131 (emissive colorant). The solutions of the dyes were added to NeoRez 1017 to give a binder to emissive colorant ratio of 7:1 and CELLOSIZE ER-4400 was added to achieve a viscosity suitable for screen printing. The final formulation included the following:

### Ingredients:

| | |
|---|---|
| NeoRez 1017 | 2.0 grams |
| 1% solution of C.I. Acid Blue 93 | 3.8 grams |
| 1% solution of C.I. Acid Yellow 7 | 3.9 grams |
| 1% solution of TERASIL Flavine Yellow 10GFF | 11. 4 grams |
| 1% solution of C.I. Acid Red 131 | 1.55 grams |
| 1% solution of C.I. Acid Violet 48 | 7.6 grams |
| CELLOSIZE ER-4400 | 0.615 g |

NeoRez 1017 is a water born polyurethane sold by DSM.

The formulation was mixed as described above to achieve formulation 4. The dye was printed on a nylon/cotton blend fabric using screen printing and a 120-mesh screen. The printed fabric was dried.

The finished printed fabric was measured for tactile feel and softness, as well as for color in the same manner as outlined above.

### Results

The tactile feel and softness of hand of the printed fabric were indistinguishable from that of the unprinted fabric. Referring to FIG. 4, a color shift from greener to redder was observed along the x-axis, while a modest change in the color shift was observed along the y-axis from yellower to bluer. These color changes illustrated the direction and magnitude of the visual color change when moving from daylight to shade. Visually, the sample was olive green under daylight and medium brown under horizon lighting. Referring to the illustration below for formulation 4, the measured color shift was almost 4.5 points in the a* axis; becoming redder, while the L* and b* values were virtually unchanged.

**Table 7. Analysis of Formulation 4**

| **Formulation** | | **L*** | **a*** | **b*** | **dE*** |
|---|---|---|---|---|---|
| **4** | **D65 (daylight)** | 50.06 | -1.34 | 27.58 | |
| | **D50 (horizon)** | 50.35 | 3.15 | 27.69 | |
| | **Delta** | 0.29 | 4.49 | 0.11 | 4.50 |

Taken together, the results from the tactile feel and softness, as well as the color experiments confirmed the manufacture of an ink formulation that when printed on a fabric, produced a printed fabric that responded to ambient lighting environments, while still possessing a tactile feel and softness of hand that were indistinguishable from the unprinted fabric.

### Example 9. Printed Fabrics made using Formulation 5

### Materials and Methods

1% solutions of the following dyes were prepared in the same manner described above: C.I. Acid Blue 93 (absorptive colorant), C.I. Acid Yellow 7 (emissive colorant), C.I. Acid Violet 48 (emissive colorant) and C.I. Acid Red 131 (emissive colorant). The solutions of the dyes were added to SOLUCOTE 1050 as presented above to achieve a binder to binder emissive colorant ratio of 5:1. CELLOSIZE ER-4400 was added to achieve a viscosity suitable for screen printing. The final formulation included the following:

### Ingredients:

| | |
|---|---|
| SOLUCOTE 1050 | 2.0 grams |
| 1% solution of C.I. Acid Blue 93 | 4.8 grams |
| 1% solution of C.I. Acid Yellow 7 | 24 grams |
| 1 % solution of C.I. Acid Red 131 | 1.94 grams |
| 1% solution of C.I. Acid Violet 48 | 9.6 grams |
| CELLOSIZE ER-4400 | 0.864 grams |

The formulation was mixed as described above to achieve formulation 5. The dye was printed on a nylon/cotton blend fabric using screen printing and 120-mesh screen. The printed fabric was dried as described above.

The finished printed fabric was measured for tactile feel and softness, as well as for color in the same manner as outlined above.

### Results

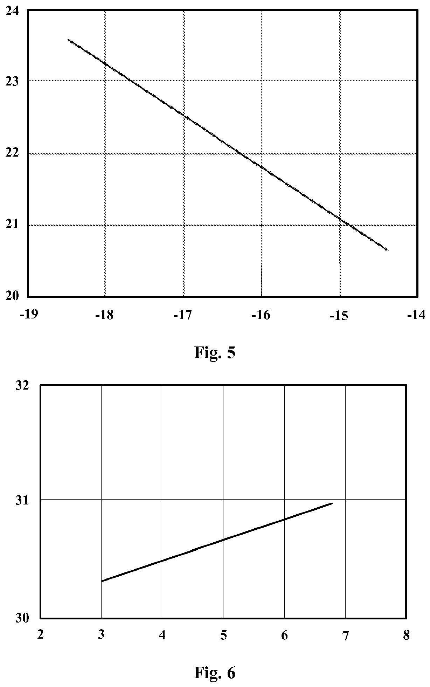

The tactile feel and softness of hand of the printed fabric were indistinguishable from that of the unprinted fabric. Referring to FIG. 5, a color shift from greener to redder was observed along the x-axis with an equally as large change in the color shift along the y-axis from yellower to bluer. These color shifts illustrated the direction and magnitude of the visual color change when moving from daylight to shade. Visually, the sample was olive green in daylight and reddish brown under horizon lighting. Referring to the illustration below for formulation 5, the measured color change was 4.5 points on the a* axis and almost -1.6 on the b* axis with a slight lightening of the color under daylight conditions.

**Table 8. Analysis of Formulation 5**

| **Formulation** | | **L*** | **a*** | **b*** | **dE*** |
|---|---|---|---|---|---|
| **5** | **D65 (daylight)** | 51.92 | 1.39 | 17.03 | |
| | **D50 (Horizon)** | 51.39 | 5.91 | 15.44 | |
| | **Delta** | -0.53 | 4.52 | -1.59 | 4.82 |

Taken together, the results from the tactile feel and softness, as well as the color experiments, confirmed the manufacture of an ink formulation that when printed on a fabric, produced a printed fabric that responded to ambient lighting environments, while still possessing a tactile feel and softness of hand that were indistinguishable from the unprinted fabric.

### Example 10. Printed Fabrics made using Formulation 6

### Materials and Methods

1% solutions of the following dyes were prepared in the same manner as outlined above: C.I. Acid Blue 93 (absorptive colorant), C.I. Acid Yellow 7 (emissive colorant), and TERASIL Flavine Yellow 10GFF (emissive colorant) (sold by Ciba Specialty Chemicals), C.I. Acid Violet 48 (emissive colorant) and C.I. Acid Red 131 (emissive colorant). The solutions of the dyes were added to NeoCryl A-622 as described above to achieve a ratio of binder to emissive colorant of 6.6. CELLOSIZE ER-4400 was added to achieve a viscosity suitable for screen printing. The final formulation is as shown below. The formulation was mixed as discussed above to achieve formulation 6. The dye was printed on a nylon/cotton blend fabric using screen printing and a 120-mesh screen. The printed fabric was dried following the approach described above.

### Ingredients:

| | |
|---|---|
| NeoCryl A-622 | 2.0 grams |
| 1% solution of C.I. Acid Blue 93 | 3.8 grams |
| 1% solution of C.I. Acid Yellow 7 | 3.9 grams |
| 1% solution of C.I. Terasil Yellow 10GFF | 11.4 grams |
| 1% solution of C.I. Acid Red 131 | 1.55 grams |
| 1% solution of C.I. Acid Violet 48 | 9.6 grams |
| CELLOSIZE ER-4400 | 0.57 grams |

The finished printed fabric was measured for tactile feel and softness, as well as for color in the same manner as outlined above.

### Results

The tactile feel and softness of hand of the printed fabric were indistinguishable from that of the unprinted fabric. Referring to FIG. 6, a color shift from redder to greener was observed along the x-axis with small change in the color shift along the y-axis from yellower to bluer. These color shifts illustrated the direction and magnitude of the visual color change when moving from daylight to shade. Visually, the sample was observed to be a medium green under daylight conditions and a dull forest green color under horizon lighting. Referring to the illustration below for formulation 6, the color change was over 4 points on the a* axis and almost -3 points on the b* axis, with almost no change in the L* value.

**Table 9. Analysis of Formulation 6**

| **Formulation** | | **L*** | **a*** | **b*** | **dE*** |
|---|---|---|---|---|---|
| **6** | **D65 (daylight)** | 49.11 | -18.47 | 23.58 | |
| | **D50 (Horizon)** | 49.01 | -14.4 | 20.65 | |
| | **Delta** | -0.1 | 4.07 | -2.93 | 5.02 |

Taken together, the results from the tactile feel and softness, as well as the color experiments confirmed the manufacture of an ink formulation that when printed on a fabric, produced a printed fabric that responded to ambient lighting environments, while still possessing a tactile feel and softness of hand that were indistinguishable from the unprinted fabric.

The invention includes at least the following embodiments.
Embodiment 1. A textile, fabric or other flexible material having applied thereto a chromatic luminescent composition , comprising at least one non-luminescent material, at least one luminescent material and at least one binder, wherein the chromatic luminescent composition modulates color, brightness and/or frequency through absorption and emission as a function of incident electromagnetic radiation; and wherein the weight ratio of the at least one binder to the at least one luminescent material is between 3.8:1 and 10:1, and wherein the fluorescence of the chromatic luminescent composition is greater than 5000 a.u. when the chromatic luminescent composition is excited at 470 nm and the fluorescence is measured at λmax of 518.6.
Embodiment 2. The material of embodiment 1, wherein the absorption spectrum of at least one of the luminescent materials at least partially overlaps with the emission spectrum of at least one of the luminescent materials.
Embodiment 3. The material of embodiment 1 or 2, wherein the absorption spectrum of at least one of the non-luminescent materials further partially overlaps with the emission spectrum of at least one of the luminescent materials.
Embodiment 4. The material of any of embodiment 1 to 3, wherein the luminescent material is selected from the group consisting of C.I. Acid Yellow 7, TERASIL Flavine 10GFF, Fluorescent Blue G, C.I. Acid Red 131, Synthrowite NWV, C.I. Acid Violet 4, fluorescein isothiocyanate (FITC), 5,6-carboxymethyl fluorescein, Texas red, coumarin, rhodamine, amino-methyl coumarin (AMCA), Eosin, Erythrosin, Cascade Blue, Oregon Green, lissamine, xanthenes, acridines, oxazines, phycoerythrin, Acid Fuchsin, Alizarin Red, Allophycocyanin, Aminocoumarin, Astrazon Brilliant Red 4G, Astrazon Orange R, Astrazon Red 6B, Astrazon Yellow 7 GLL, Auramine, Aurophosphine, Brilliant Sulphoflavin FF, Calcien Blue, Calcium Green, Calcofluor RW Solution, Cascade Yellow, CY3.1 8, CY5.1 8, CY7, Diphenyl Brilliant Flavine 7GFF, Erythrosin ITC, Euchrysin, Flazo Orange, Fluorescamine, Fura-2, Genacryl Brilliant Red B, Genacryl Brilliant Yellow 10GF, Genacryl Pink 3G, Genacryl Yellow 5GF, Leucophor PAF, Leucophor SF, Leucophor WS, Lissamine Rhodamine B200 (RD200), Lucifer Yellow CH, Lucifer Yellow VS, Magdala Red, Marina Blue, Maxilon Brilliant Flavin 10 GFF, Maxilon Brilliant Flavin 8 GFF, MPS (Methyl Green Pyronine Stilbene), Nuclear Fast Red, Nuclear Yellow, Nylosan Brilliant Flavin E8G, Pacific Blue, Pararosaniline (Feulgen), Phorwite AR Solution, Phorwite BKL, Phorwite Rev, Phthalocyanine, Phycoerythrin R, Polyazaindacene Pontochrome Blue Black, Porphyrin, Procion Yellow, Pyronine, Pyronine B, Pyrozal Brilliant Flavin 7GF, Rhodamine 123, Rhodamine 5 GLD, Rhodamine 6G, Rhodamine B, Rhodamine B 200, Rhodamine B Extra, Rhodamine BB, Rhodamine BG, Rhodamine WT, Sevron Brilliant Red 2B, Sevron Brilliant Red 4G, Sevron Brilliant Red B, Sevron Orange, Sevron Yellow L, sulpho Rhodamine B, Sulpho Rhodamine G Extra, Thiazine Red R, Thioflavin S, Thioflavin TCN, Thioflavin 5Thiozol Orange, and Xylene Orange.
Embodiment 5. The material of any of embodiments 1 to 4, wherein the luminescent material is selected from the group consisting of C.I. Acid Yellow 7, TERASIL Flavine 10GFF, Fluorescent Blue G, C.I. Acid Red 131, Synthrowite NWV, and C.I. Acid Violet 48.
Embodiment 6. The material of any of embodiments 1 to 5, wherein the non-luminescent material is selected from the group consisting of an organic non-fluorescent material and an inorganic non-fluorescent material.
Embodiment 7. The material of any of embodiments 1 to 6, wherein the non-luminescent material is selected from the group consisting of acid dyes, basic dyes, direct dyes, disperse dyes.
Embodiment 8. The material of any of embodiments 1 to 7, wherein the non-luminescent material is selected from the group consisting of # 405 Deep Purple, #411 Deep magenta, # 424 true turquoise, #602 Bright yellow, # 617 Cherry Red, #623 brilliant Blue, C.I. Acid Blue 45, C.I. Acid Red 138, Acid Black 172, C.I. Acid Red 74, C.I. Basic yellow 28, C.I. Basic blue 8, C.I. Basic Red 9, C.I. Basic Green 4, C.I. Direct Red 80, Mordant Yellow 3, Mordant Red 26, Mordant Orange 6, C.I. Direct Blue 67, C.I. Direct Orange 72, C.I. direct Red 83, #D118 Bright Yellow, # D360 Bright Red, #D459 Bright Blue, #D885 Lilac, C.I. Disperse yellow 3, C.I. Disperse Red 7, C.I. Disperse Blue 7,C.I. Disperse Red 60,C.I. Disperse Red 91, C.I. Disperse Blue 165, C.I. Reactive Yellow 86, C.I. Reactive Orange 4, C.I. Reactive Red 11, C.I. Reactive Red 195, C.I. Reactive Violet 14, and C.I. Reactive Blue 163.
Embodiment 9. The material of any of embodiments 1 to 8, further comprising one or more additives selected from the group consisting of polymers, dispersants, binders, thickeners, defoamers, and combinations thereof.
Embodiment 10. The material of any of embodiments 1 to 9, comprising a binder, wherein the ratio of binder to luminescent material is in a range between 3.8:1 and 10:1.
Embodiment 11. The material of embodiment 1 wherein the chromatic luminescent composition is selected from the group consisting of
   Aqueous acrylic binder, 1% C.I. Acid Blue 93, 1% C.I. Acid Yellow 7, 1% Terasil Flavine Yellow 10GFF, 1% Fluorescent Blue G, hydroxyethyl cellulose;
   Aqueous acrylic binder, 1% C.I. Acid Blue 93, 1% C.I. Acid Yellow 7, 1% C.I. Acid Red 131, 1% Synthrowite NWV, 1% Fluorescent Blue G, and hydroxyethyl cellulose;
   Aqueous polyether polyurethane binder, 1% C.I. Acid Blue 93, 1% C.I. Acid Yellow 7, 1% C.I. Acid Red 131, and hydroxyethyl cellulose;
   Aqueous polyurethane binder, 1% C.I. Acid Blue 93, 1% C.I. Acid Yellow 7, 1% Terasil Flavine Yellow 10GFF, 1% C.I. Acid Red 131, 1% C.I. Acid Violet 48, and hydroxyethyl cellulose;
   Aqueous polyester polyurethane binder, 1% C.I. Acid Blue 93, 1% C.I. Acid Yellow 7, 1% C.I. Acid Red 131, 1% Acid Violet 48, and hydroxyethyl cellulose; and
   Aqueous acrylic binder, 1% C.I. Acid Blue 93, 1% C.I. Acid Yellow 7, 1% Terasil Yellow 10GFF, 1% C.I. Acid Red 131, 1% C.I. Acid Violet 48, and hydroxyethyl cellulose
Embodiment 12. The material of any of embodiments 1 to 11, further comprising a thickener.
Embodiment 12a. The material of embodiment 12, wherein the thickener comprises hydroxyethyl cellulose.
Embodiment 13. The material of any of embodiments 1 to 12a, wherein the luminescent material and non-luminescent materials are present in a weight ratio to the binder of between 3.8:1 and 10:1, preferably between 4.8 to 1.
Embodiment 14. The material of any of embodiments 1 to 13, wherein the ratio of the non-luminescent to luminescent materials in the chromatic luminescent composition is 2:90% to 20:80% by weight.
Embodiment 15. The material of any of embodiments 1 to 14, wherein the chromatic luminescent composition is applied to a material selected from the group consisting of clothing, tents, weapon and vehicle covers, netting, parachutes, and other fabrics, textiles, and coverings.
Embodiment 16. A chromatic luminescent composition, comprising at least one non-luminescent material, at least one luminescent material and at least one binder, wherein the chromatic luminescent composition modulates color, brightness and/or frequency through absorption and emission as a function of incident electromagnetic radiation, wherein the chromatic luminescent composition applied to a textile does not significantly alter the hand of the textile, and wherein the ratio of binder to luminescent material is 3.8:1 to 10:1, and wherein the fluorescence of the chromatic luminescent composition is greater than 5000 a.u. when the chromatic luminescent composition is excited at 470 nm and the fluorescence is measured at λmax of 518.6.
Embodiment 17. The chromatic luminescent composition of embodiment 16, wherein the absorption spectrum of at least one of the luminescent materials at least partially overlaps with the emission spectrum of at least one of the luminescent materials.
Embodiment 18. The chromatic luminescent composition of embodiment 16 or 17, wherein the absorption spectrum of at least one of the non-luminescent materials further partially overlaps with the emission spectrum of at least one of the luminescent materials.
Embodiment 19. The chromatic luminescent composition of any of embodiments 16 to 18, formulated for application to a textile material.
Embodiment 20. A method for making the material of any of embodiments 1 to 15, comprising applying a solution or suspension of the chromatic luminescent composition of any of embodiments 16 to 18 to a material selected from the group consisting of clothing, tents, weapon and vehicle covers, netting, parachutes, and other fabrics, textiles, and coverings, and removing the solvent.
Embodiment 21. The method of embodiment 20, comprising applying the chromatic luminescent composition to a textile material formed of a natural fiber such as cotton, linen, cellulose, hemp and jute, silk, or wool, synthetic fibers of polymers such as polyesters, polyethylenes, acrylics, nylons, polypropylenes, poly(ethylene terephthalate)s, blends of acrylic fibers, elastic polymers, and blends, composites, and laminates thereof.
Embodiment 22. The method of embodiment 20 or 21, wherein applying the chromatic luminescent composition or binder is by a spraying, saturation, print, or foam method.
Embodiment 23. The method of any of embodiments 20 to 22, wherein applying the chromatic luminescent composition or binder is by screen printing, either by flat screen or by rotary screen; ink jet printing; saturation coating; spray coating; vat dying; or any combination thereof.

## Claims

1. A textile, fabric or other flexible material having applied thereto a chromatic luminescent composition, comprising at least one non-luminescent material, at least one luminescent material and at least one binder,
wherein the chromatic luminescent composition modulates color, brightness and/or frequency through absorption and emission as a function of incident electromagnetic radiation, and wherein the material has a hand comparable to the material not including the chromatic luminescent composition, and
wherein the weight ratio of the at least one binder to the at least one luminescent material is between 3.8:1 and 10:1, and
wherein the fluorescence of the chromatic luminescent composition is greater than 5000 a.u. when the chromatic luminescent composition is excited at 470 nm and the fluorescence is measured at λmax of 518.6.

2. The material of claim 1, wherein the absorption spectrum of at least one of the luminescent materials at least partially overlaps with the emission spectrum of at least one of the luminescent materials; and/or
wherein the absorption spectrum of at least one of the non-luminescent materials further partially overlaps with the emission spectrum of at least one of the luminescent materials.

3. The material of claim 1, wherein the luminescent material is selected from the group consisting of C.I. Acid Yellow 7, TERASIL Flavine 10GFF, Fluorescent Blue G, C.I. Acid Red 131, Synthrowite NWV, C.I. Acid Violet 4, fluorescein isothiocyanate (FITC), 5,6-carboxymethyl fluorescein, Texas red, coumarin, rhodamine, amino-methyl coumarin (AMCA), Eosin, Erythrosin, Cascade Blue, Oregon Green, lissamine, xanthenes, acridines, oxazines, phycoerythrin, Acid Fuchsin, Alizarin Red, Allophycocyanin, Aminocoumarin, Astrazon Brilliant Red 4G, Astrazon Orange R, Astrazon Red 6B, Astrazon Yellow 7 GLL, Auramine, Aurophosphine, Brilliant Sulphoflavin FF, Calcien Blue, Calcium Green, Calcofluor RW Solution, Cascade Yellow, CY3.1 8, CY5.1 8, CY7, Diphenyl Brilliant Flavine 7GFF, Erythrosin ITC, Euchrysin, Flazo Orange, Fluorescamine, Fura-2, Genacryl Brilliant Red B, Genacryl Brilliant Yellow 10GF, Genacryl Pink 3G, Genacryl Yellow 5GF, Leucophor PAF, Leucophor SF, Leucophor WS, Lissamine Rhodamine B200 (RD200), Lucifer Yellow CH, Lucifer Yellow VS, Magdala Red, Marina Blue, Maxilon Brilliant Flavin 10 GFF, Maxilon Brilliant Flavin 8 GFF, MPS (Methyl Green Pyronine Stilbene), Nuclear Fast Red, Nuclear Yellow, Nylosan Brilliant Flavin E8G, Pacific Blue, Pararosaniline (Feulgen), Phorwite AR Solution, Phorwite BKL, Phorwite Rev, Phthalocyanine, Phycoerythrin R, Polyazaindacene Pontochrome Blue Black, Porphyrin, Procion Yellow, Pyronine, Pyronine B, Pyrozal Brilliant Flavin 7GF, Rhodamine 123, Rhodamine 5 GLD, Rhodamine 6G, Rhodamine B, Rhodamine B 200, Rhodamine B Extra, Rhodamine BB, Rhodamine BG, Rhodamine WT, Sevron Brilliant Red 2B, Sevron Brilliant Red 4G, Sevron Brilliant Red B, Sevron Orange, Sevron Yellow L, sulpho Rhodamine B, Sulpho Rhodamine G Extra, Thiazine Red R, Thioflavin S, Thioflavin TCN, Thioflavin 5Thiozol Orange, and Xylene Orange, and preferably wherein the luminescent material is selected from the group consisting of C.I. Acid Yellow 7, TERASIL Flavine 10GFF, Fluorescent Blue G, C.I. Acid Red 131, Synthrowite NWV, and C.I. Acid Violet 48.

4. The material of claim 1, wherein the non-luminescent material is selected from the group consisting of an organic non-fluorescent material and an inorganic non-fluorescent material; and/or
wherein the non-luminescent material is selected from the group consisting of acid dyes, basic dyes, direct dyes, disperse dyes.

5. The material of claim 1, wherein the non-luminescent material is selected from the group consisting of an organic non-fluorescent material and an inorganic non-fluorescent material and wherein the non-luminescent material is selected from the group consisting of # 405 Deep Purple, #411 Deep magenta, # 424 true turquoise, #602 Bright yellow, # 617 Cherry Red, #623 brilliant Blue, C.I. Acid Blue 45, C.I. Acid Red 138, Acid Black 172, C.I. Acid Red 74, C.I. Basic yellow 28, C.I. Basic blue 8, C.I. Basic Red 9, C.I. Basic Green 4, C.I. Direct Red 80, Mordant Yellow 3, Mordant Red 26, Mordant Orange 6, C.I. Direct Blue 67, C.I. Direct Orange 72, C.I. direct Red 83, #D118 Bright Yellow, #D360 Bright Red, #D459 Bright Blue, #D885 Lilac, C.I. Disperse yellow 3, C.I. Disperse Red 7, C.I. Disperse Blue 7,C.I. Disperse Red 60,C.I. Disperse Red 91, C.I. Disperse Blue 165, C.I. Reactive Yellow 86, C.I. Reactive Orange 4, C.I. Reactive Red 11, C.I. Reactive Red 195, C.I. Reactive Violet 14, and C.I. Reactive Blue 163.

6. The material of claim 1, further comprising one or more additives selected from the group consisting of polymers, dispersants, binders, thickeners, defoamers, and combinations thereof.

7. The material of claim 1 comprising:
(i) a binder, wherein the ratio of binder to luminescent material is in a range between 3.8:1 and 10:1; and/or
(ii) a thickener such as hydroxyethyl cellulose.

8. The material of claim 1 wherein the chromatic luminescent composition is selected from the group consisting of
Aqueous acrylic binder, 1% C.I. Acid Blue 93, 1% C.I. Acid Yellow 7, 1% Terasil Flavine Yellow 10GFF, 1% Fluorescent Blue G, hydroxyethyl cellulose;
Aqueous acrylic binder, 1% C.I. Acid Blue 93, 1% C.I. Acid Yellow 7, 1% C.I. Acid Red 131, 1% Synthrowite NWV, 1% Fluorescent Blue G, and hydroxyethyl cellulose;
Aqueous polyether polyurethane binder, 1% C.I. Acid Blue 93, 1% C.I. Acid Yellow 7, 1% C.I. Acid Red 131, and hydroxyethyl cellulose;
Aqueous polyurethane binder, 1% C.I. Acid Blue 93, 1% C.I. Acid Yellow 7, 1% Terasil Flavine Yellow 10GFF, 1% C.I. Acid Red 131, 1% C.I. Acid Violet 48, and hydroxyethyl cellulose;
Aqueous polyester polyurethane binder, 1% C.I. Acid Blue 93, 1% C.I. Acid Yellow 7, 1 % C.I. Acid Red 131, 1% Acid Violet 48, and hydroxyethyl cellulose; and
Aqueous acrylic binder, 1% C.I. Acid Blue 93, 1% C.I. Acid Yellow 7, 1% Terasil Yellow 10GFF, 1% C.I. Acid Red 131, 1% C.I. Acid Violet 48, and hydroxyethyl cellulose.

9. The material of claim 1 wherein:
(a) the luminescent material and non-luminescent materials are present in a weight ratio to the binder of between 3.8:1 and 10:1, preferably between 4.8 to 1; and/or
(b) the ratio of the non-luminescent to luminescent materials in the chromatic luminescent composition is between 2:90% and 20:80% by weight.

10. The material of claim 1 wherein the chromatic luminescent composition is applied to a material selected from the group consisting of clothing, tents, weapon and vehicle covers, netting, parachutes, and other fabrics, textiles, and coverings.

11. A chromatic luminescent composition, comprising at least one non-luminescent material, at least one luminescent material and at least one binder, wherein the chromatic luminescent composition modulates color, brightness and/or frequency through absorption and emission as a function of incident electromagnetic radiation,
wherein the chromatic luminescent composition applied to a textile does not significantly alter the hand of the textile, and
wherein the ratio of binder to luminescent material is 3.8:1 to 10:1, and
wherein the fluorescence of the chromatic luminescent composition is greater than 5000 a.u. when the chromatic luminescent composition is excited at 470 nm and the fluorescence is measured at λmax of 518.6.

12. The chromatic luminescent composition of claim 11, wherein the absorption spectrum of at least one of the luminescent materials at least partially overlaps with the emission spectrum of at least one of the luminescent materials; and/or
wherein the absorption spectrum of at least one of the non-luminescent materials further partially overlaps with the emission spectrum of at least one of the luminescent materials.

13. The chromatic luminescent composition of claim 11, formulated for application to a textile material.

14. A method for making the material of claim 1 comprising applying a solution or suspension of the chromatic luminescent composition of claim 11 to a material selected from the group consisting of clothing, tents, weapon and vehicle covers, netting, parachutes, and other fabrics, textiles, and coverings, and removing the solvent,
preferably wherein the method comprises applying the chromatic luminescent composition to a textile material formed of a natural fiber such as cotton, linen, cellulose, hemp and jute, silk, or wool, synthetic fibers of polymers such as polyesters, polyethylenes, acrylics, nylons, polypropylenes, poly(ethylene terephthalate)s, blends of acrylic fibers, elastic polymers, and blends, composites, and laminates thereof.

15. The method of claim 14 wherein applying the chromatic luminescent composition is by a spraying, saturation, print, or foam method, and preferably wherein applying the chromatic luminescent composition or binder is by screen printing, either by flat screen or by rotary screen; ink jet printing; saturation coating; spray coating; vat dyeing; or any combination thereof.

## Patentansprüche

1. Textil, Gewebe oder anderes flexibles Material, auf das eine chromatische Lumineszenzzusammensetzung aufgebracht ist, umfassend mindestens ein nicht lumineszierendes Material, mindestens ein Lumineszenzmaterial und mindestens ein Bindemittel,
wobei die chromatische Lumineszenzzusammensetzung Farbe, Helligkeit und/oder Frequenz durch Absorption und Emission als eine Funktion von einfallender elektromagnetischer Strahlung moduliert, und wobei das Material eine taktile Wahrnehmung aufweist, die mit dem Material vergleichbar ist, das die chromatische Lumineszenzzusammensetzung nicht umfasst, und
wobei das Gewichtsverhältnis von dem mindestens einen Bindemittel zu dem mindestens einen Lumineszenzmaterial zwischen 3,8:1 und 10:1 liegt, und
wobei die Fluoreszenz der chromatischen Lumineszenzzusammensetzung größer als 5000 a.u. ist, wenn die chromatische Lumineszenzzusammensetzung bei 470 nm angeregt wird und die Fluoreszenz bei λmax von 518,6 gemessen wird.

2. Material nach Anspruch 1, wobei das Absorptionsspektrum von mindestens einem der Lumineszenzmaterialien zumindest teilweise mit dem Emissionsspektrum von mindestens einem der Lumineszenzmaterialien überlappt; und/oder
wobei das Absorptionsspektrum von mindestens einem der nicht lumineszierenden Materialien ferner teilweise mit dem Emissionsspektrum von mindestens einem der Lumineszenzmaterialien überlappt.

3. Material nach Anspruch 1, wobei das Lumineszenzmaterial ausgewählt ist aus der Gruppe bestehend aus C.I. Acid Yellow 7, TERASIL Flavine 10GFF, Fluorescent Blue G, C.I. Acid Red 131, Synthrowite NWV, C.I. Acid Violet 4, Fluoresceinisothiocyanat (FITC), 5,6-Carboxymethylfluorescein, Texas Red, Cumarin, Rhodamin, Aminomethylcumarin (AMCA), Eosin, Erythrosin, Cascade Blue, Oregon Green, Lissamin, Xanthenen, Acridinen, Oxazinen, Phycoerythrin, Säurefuchsin, Alizarinrot, Allophycocyanin, Aminocumarin, Astrazon Brilliant Red 4G, Astrazon Orange R, Astrazon Red 6B, Astrazon Yellow 7 GLL, Auramin, Aurophosphin, Brilliant Sulphoflavin FF, Calcienblau, Calciumgrün, Calcofluor RW Lösung, Cascade Yellow, CY3.1 8, CY5.1 8, CY7, Diphenyl Brilliant Flavine 7GFF, Erythrosin ITC, Euchrysin, Flazo Orange, Fluorescamin, Fura-2, Genacryl Brilliant Red B, Genacryl Brilliant Yellow 10GF, Genacryl Pink 3G, Genacryl Yellow 5GF, Leucophor PAF, Leucophor SF, Leucophor WS, Lissamin Rhodamin B200 (RD200), Luzifergelb CH, Luzifergelb VS, Magdalarot, Marina Blue, Maxilon Brilliant Flavin 10 GFF, Maxilon Brilliant Flavin 8 GFF, MPS (Methylgrün Pyronin Stilben), Kernechtrot, Nuclear Yellow, Nylosan Brilliant Flavin E8G, Pacific Blue, Pararosanilin (Feulgen), Phorwite AR-Lösung, Phorwite BKL, Phorwite Rev, Phthalocyanin, Phycoerythrin R, Polyazaindacen Pontochrome Blue Black, Porphyrin, Procion Yellow, Pyronin, Pyronin B, Pyrozal Brilliant Flavin 7GF, Rhodamin 123, Rhodamin 5 GLD, Rhodamin 6G, Rhodamin B, Rhodamin B 200, Rhodamin B Extra, Rhodamin BB, Rhodamin BG, Rhodamin WT, Sevron Brilliant Red 2B, Sevron Brilliant Red 4G, Sevron Brilliant Red B, Sevron Orange, Sevron Yellow L, Sulfo-Rhodamin B, Sulfo-Rhodamin G-Extra, Thiazinrot R, Thioflavin S, Thiofiavin TCN, Thioflavin 5Thiozolorange und Xylolorange, und bevorzugt wobei das Lumineszenzmaterial ausgewählt ist aus der Gruppe bestehend aus C.I. Acid Yellow 7, TERASIL Flavine 10GFF, Fluorescent Blue G, C.I. Acid Red 131, Synthrowite NWV und C.I. Acid Violet 48.

4. Material nach Anspruch 1, wobei das nicht lumineszierende Material ausgewählt ist aus der Gruppe bestehend aus einem organischen nicht fluoreszierenden Material und einem anorganischen nicht fluoreszierenden Material; und/oder
wobei das nicht lumineszierende Material ausgewählt ist aus der Gruppe bestehend aus Säurefarbstoffen, basischen Farbstoffen, Direktfarbstoffen, Dispersionsfarbstoffen.

5. Material nach Anspruch 1, wobei das nicht lumineszierende Material ausgewählt ist aus der Gruppe bestehend aus einem organischen nicht fluoreszierenden Material und einem anorganischen nicht fluoreszierenden Material und wobei das nicht fluoreszierende Material ausgewählt ist aus der Gruppe bestehend aus # 405 Deep Purple, # 411 Deep Magenta, # 424 True Turquoise, # 602 Bright Yellow, # 617 Cherry Red, # 623 Brilliant Blue, C.I. Acid Blue 45, C.I. Acid Red 138, Acid Black 172, C.I. Acid Red 74, C.I. Basic Yellow 28, C.I. Basic Blue 8, C.I. Basic Red 9, C.I. Basic Green 4, C.I. Direct Red 80, Mordant Yellow 3, Mordant Red 26, Mordant Orange 6, C.I. Direct Blue 67, C.I. Direct Orange 72, C.I. Direct Red 83, # D118 Bright Yellow, # D360 Bright Red, # D459 Bright Blue, # D885 Lilac, C.I. Disperse Yellow 3, C.I. Disperse Red 7, C.I. Disperse Blue 7, C.I. Disperse Red 60, C.I. Disperse Red 91, C.I. Disperse Blue 165, C.I. Reactive Yellow 86, C.I. Reactive Orange 4, C.I. Reactive Red 11, C.I. Reactive Red 195, C.I. Reactive Violet 14 und C.I. Reactive Blue 163.

6. Material nach Anspruch 1, ferner umfassend ein oder mehrere Additive, ausgewählt aus der Gruppe bestehend aus Polymeren, Dispergiermitteln, Bindemitteln, Verdickungsmitteln, Entschäumern und Kombinationen davon.

7. Material nach Anspruch 1, umfassend
(i) ein Bindemittel, wobei das Verhältnis von Bindemittel zu Lumineszenzmaterial in einem Bereich zwischen 3,8:1 und 10:1 liegt; und/oder
(ii) ein Verdickungsmittel wie beispielsweise Hydroxyethylcellulose.

8. Material nach Anspruch 1, wobei die chromatische Lumineszenzzusammensetzung ausgewählt ist aus der Gruppe bestehend aus
wässrigem Acrylbindemittel, 1% C.I. Acid Blue 93, 1% C.I. Acid Yellow 7, 1% Terasil Flavine Yellow 10GFF, 1% Fluorescent Blue G, Hydroxyethylcellulose;
wässrigem Acrylbindemittel, 1% C.I. Acid Blue 93, 1% C.I. Acid Yellow 7, 1% C.I. Acid Red 131, 1% Synthrowite NWV, 1% Fluorescent Blue G und Hydroxyethylcellulose;
wässrigem Polyetherpolyurethanbindemittel, 1% C.I. Acid Blue 93, 1% C.I. Acid Yellow 7, 1% C.I. Acid Red 131 und Hydroxyethylcellulose;
wässrigem Polyurethanbindemittel, 1% C.I. Acid Blue 93, 1% C.I. Acid Yellow 7, 1% Terasil Flavine Yellow 10GFF, 1% C.I. Acid Red 131, 1% C.I. Acid Violet 48 und Hydroxyethylcellulose;
wässrigem Polyesterpolyurethanbindemittel, 1% C.I. Acid Blue 93, 1% C.I. Acid Yellow 7, 1% C.I. Acid Red 131, 1% Acid Violet 48 und Hydroxyethylcellulose; und
wässrigem Acrylbindemittel, 1% C.I. Acid Blue 93, 1% C.I. Acid Yellow 7, 1% Terasil Yellow 10GFF, 1% C.I. Acid Red 131, 1% C.I. Acid Violet 48 und Hydroxyethylcellulose.

9. Material nach Anspruch 1, wobei:
(a) das Lumineszenzmaterial und die nicht lumineszierenden Materialien in einem Gewichtsverhältnis zum Bindemittel zwischen 3,8:1 und 10:1 vorliegen, vorzugsweise zwischen 4,8 zu 1; und/oder
(b) das Verhältnis der nicht lumineszierenden Materialien zu den Lumineszenzmaterialien in der chromatischen Lumineszenzzusammensetzung zwischen 2:90 Gew.-% und 20:80 Gew.-% beträgt.

10. Material nach Anspruch 1, wobei die chromatische Lumineszenzzusammensetzung auf ein Material angewendet wird, das aus der Gruppe ausgewählt ist, bestehend aus Kleidung, Zelten, Waffen- und Fahrzeugabdeckungen, Netzen, Fallschirmen und anderen Stoffen, Textilien und Abdeckungen.

11. Chromatische Lumineszenzzusammensetzung, umfassend mindestens ein nicht lumineszierendes Material, mindestens ein Lumineszenzmaterial und mindestens ein Bindemittel, wobei die chromatische Lumineszenzzusammensetzung Farbe, Helligkeit und/oder Frequenz durch Absorption und Emission als eine Funktion einfallender elektromagnetischer Strahlung moduliert,
wobei die auf ein Textil aufgebrachte chromatische Lumineszenzzusammensetzung die taktile Wahrnehmung des Textils nicht wesentlich verändert und
wobei das Verhältnis von Bindemittel zu Lumineszenzmaterial 3,8:1 bis 10:1 beträgt und
wobei die Fluoreszenz der chromatischen Lumineszenzzusammensetzung größer als 5000 a.u. ist, wenn die chromatische Lumineszenzzusammensetzung bei 470 nm angeregt wird und die Fluoreszenz bei λmax von 518,6 gemessen wird.

12. Chromatische Lumineszenzzusammensetzung nach Anspruch 11, wobei das Absorptionsspektrum von mindestens einem der Lumineszenzmaterialien zumindest teilweise mit dem Emissionsspektrum von mindestens einem der Lumineszenzmaterialien überlappt; und/oder
wobei das Absorptionsspektrum von mindestens einem der nicht lumineszierenden Materialien ferner teilweise mit dem Emissionsspektrum von mindestens einem der Lumineszenzmaterialien überlappt.

13. Chromatische Lumineszenzzusammensetzung nach Anspruch 11, formuliert zur Anwendung auf ein Textilmaterial.

14. Verfahren zur Herstellung des Materials nach Anspruch 1, umfassend Aufbringen einer Lösung oder Suspension der chromatischen Lumineszenzzusammensetzung nach Anspruch 11 auf ein Material ausgewählt aus der Gruppe bestehend aus Kleidung, Zelten, Waffen- und Fahrzeugabdeckungen, Netzen, Fallschirmen und anderen Stoffen, Textilien und Abdeckungen, und Entfernen des Lösungsmittels,
bevorzugt wobei das Verfahren Aufbringen der chromatischen Lumineszenzzusammensetzung auf ein Textilmaterial umfasst, das aus einer Naturfaser wie Baumwolle, Leinen, Cellulose, Hanf und Jute, Seide oder Wolle, synthetischen Fasern von Polymeren wie Polyestern, Polyethylenen, Acrylen, Nylons, Polypropylenen, Poly(ethylenterephthalat)en, Mischungen von Acrylfasern, elastischen Polymeren und Mischungen, Verbundstoffen und Laminaten davon gebildet ist.

15. Verfahren nach Anspruch 14, wobei das Aufbringen der chromatischen Lumineszenzzusammensetzung durch ein Sprüh-, Sättigungs-, Druck- oder Schaumverfahren erfolgt und bevorzugt, wobei das Aufbringen der chromatischen Lumineszenzzusammensetzung oder des Bindemittels durch Siebdruck entweder durch Flachsieb oder durch Rotationssieb; Tintenstrahldruck; Sättigungsbeschichtung; Sprühbeschichtung; Küpenfärbung; oder eine beliebige Kombination davon erfolgt.

## Revendications

1. Textile, étoffe ou autre matériau flexible auquel a été appliquée une composition luminescente chromatique, comprenant au moins un matériau non luminescent, au moins un matériau luminescent et au moins un liant,
dans lequel la composition luminescente chromatique module la couleur, la luminosité et/ou la fréquence par absorption et émission en fonction d'un rayonnement électromagnétique incident, et dans lequel le matériau a une main comparable à celle du matériau ne contenant pas la composition luminescente chromatique, et
dans lequel le rapport en poids de l'au moins un liant à l'au moins un matériau luminescent est compris entre 3,8/1 et 10/1, et
dans lequel la fluorescence de la composition luminescente chromatique est supérieure à 5000 u.a. quand la composition luminescente chromatique est excitée à 470 nm et la fluorescence est mesurée à une λmax de 518,6.

2. Matériau selon la revendication 1, dans lequel le spectre d'absorption d'au moins un des matériaux luminescents chevauche au moins partiellement le spectre d'émission d'au moins un des matériaux luminescents ; et/ou
dans lequel le spectre d'absorption d'au moins un des matériaux non luminescents chevauche en outre partiellement le spectre d'émission d'au moins un des matériaux luminescents.

3. Matériau selon la revendication 1, dans lequel le matériau luminescent est choisi dans le groupe constitué par les C.I. jaune acide 7, flavine TERASIL 10GFF, bleu fluorescent G, C.I. rouge acide 131, Synthrowite NWV, C.I. violet acide 4, isothiocyanate de fluorescéine (FITC), 5,6-carboxyméthylfluorescéine, rouge Texas, coumarine, rhodamine, aminométhylcoumarine (AMCA), éosine, érythrosine, bleu Cascade, vert Oregon, lissamine, xanthènes, acridines, oxazines, phycoérythrine, fuchsine acide, rouge d'alizarine, allophycocyanine, aminocoumarine, rouge brillant Astrazon 4G, orange Astrazon R, rouge Astrazon 6B, jaune Astrazon 7 GLL, auramine, aurophosphine, sulfoflavine brillante FF, bleu Calcien, vert de calcium, solution Calcofluor RW, jaune Cascade, CY3.1 8, CY5.1 8, CY7, diphénylflavine brillante 7GFF, érythrosine ITC, euchrysine, orange Flazo, fluorescamine, Fura-2, rouge brillant Genacryl B, jaune brillant Genacryl 10GF, rose Genacryl 3G, jaune Genacryl 5GF, Leucophor PAF, Leucophor SF, Leucophor WS, rhodamine Lissamine B200 (RD200), jaune Lucifer CH, jaune Lucifer VS, rouge Magdala, bleu Marina, flavine brillante Maxilon 10 GFF, flavine brillante Maxilon 8 GFF, MPS (vert de méthyl-pyronine-stilbène), rouge Nuclear Fast, jaune Nuclear, flavine brillante Nylosan E8G, bleu Pacific, pararosaniline (Feulgen), solution Phorwite AR, Phorwite BKL, Phorwite Rev, phtalocyanine, phycoérythrine R, bleu noir de polyazaindacène Pontochrome, porphyrine, jaune Procion, pyronine, pyronine B, flavine brillante Pyrozal 7GF, rhodamine 123, rhodamine 5 GLD, rhodamine 6G, rhodamine B, rhodamine B 200, rhodamine B Extra, rhodamine BB, rhodamine BG, rhodamine WT, rouge brillant Sevron 2B, rouge brillant Sevron 4G, rouge brillant Sevron B, orange Sevron, jaune Sevron L, sulforhodamine B, sulforhodamine G Extra, rouge de thiazine R, thioflavine S, thioflavine TCN, orange de Thioflavine 5Thiozol, et orange de xylène, et de préférence dans lequel le matériau luminescent est choisi dans le groupe constitué par les C.I. jaune acide 7, TERASIL flavine 10GFF, bleu fluorescent G, C.I. rouge acide 131, Synthrowite NWV, et C.I. violet acide 48.

4. Matériau selon la revendication 1, dans lequel le matériau non luminescent est choisi dans le groupe constitué par un matériau non fluorescent organique et un matériau non fluorescent inorganique ; et/ou
dans lequel le matériau non luminescent est choisi dans le groupe constitué par les colorants acides, les colorants basiques, les colorants directs, et les colorants dispersés.

5. Matériau selon la revendication 1, dans lequel le matériau non luminescent est choisi dans le groupe constitué par un matériau non fluorescent organique et un matériau non fluorescent inorganique, et dans lequel le matériau non luminescent est choisi dans le groupe constitué par les pourpre profond #405, magenta profond #411, turquoise vraie #424, jaune brillant #602, rouge cerise #617, bleu brillant #623, C.I. bleu acide 45, C.I. rouge acide 138, noir acide 172, C.I. rouge acide 74, C.I. jaune basique 28, C.I. bleu basique 8, C.I. rouge basique 9, C.I. vert basique 4, C.I. rouge direct 80, jaune mordant 3, rouge mordant 26, orange mordant 6, C.I. bleu direct 67, C.I. orange direct 72, C.I. rouge direct 83, jaune clair #D118, rouge clair #D360, bleu clair #D459, lilas #D885, C.I. jaune dispersé 3, C.I. rouge dispersé 7, C.I. bleu dispersé 7, C.I. rouge dispersé 60, C.I. rouge dispersé 91, C.I. bleu dispersé 165, C.I. jaune réactif 86, C.I. orange réactif 4, C.I. rouge réactif 11, C.I. rouge réactif 195, C.I. violet réactif 14, et C.I. bleu réactif 163.

6. Matériau selon la revendication 1, comprenant en outre un ou plusieurs additifs choisis dans le groupe constitué par les polymères, dispersants, liants, épaississants, anti-moussants, et leurs combinaisons.

7. Matériau selon la revendication 1, comprenant :
(i) un liant, le rapport du liant au matériau luminescent étant situé dans la plage comprise entre 3,8/1 et 10/1 ; et/ou
(ii) un épaississant tel que l'hydroxyéthylcellulose.

8. Matériau selon la revendication 1, dans lequel la composition luminescente chromatique est choisie dans le groupe constitué par
liant acrylique aqueux, 1 % de C.I. bleu acide 93, 1 % de C.I. jaune acide 7, 1 % de jaune flavine Terasil 10GFF, 1 % de bleu fluorescent G, hydroxyéthylcellulose ;
liant acrylique aqueux, 1 % de C.I. bleu acide 93, 1 % de C.I. jaune acide 7, 1 % de C.I. rouge acide 131, 1 % de Synthrowite NWV, 1 % de bleu fluorescent G, et hydroxyéthylcellulose ;
liant en polyéther-polyuréthane aqueux, 1 % de C.I. bleu acide 93, 1 % de C.I. jaune acide 7, 1 % de C.I. rouge acide 131, et hydroxyéthylcellulose ;
liant en polyuréthane aqueux, 1 % de C.I. bleu acide 93, 1 % de C.I. jaune acide 7, 1 % de jaune flavine Terasil 10GFF, 1 % de C.I. rouge acide 131, 1 % de C.I. violet acide 48, et hydroxyéthylcellulose ;
liant en polyester-polyuréthane aqueux, 1 % de C.I. bleu acide 93, 1 % de C.I. jaune acide 7, 1 % de C.I. rouge acide 131, 1 % de violet acide 48 et hydroxyéthylcellulose ; et
liant acrylique aqueux, 1 % de C.I. bleu acide 93, 1 % de C.I. jaune acide 7, 1 % de jaune Terasil 10GFF, 1 % de C.I. rouge acide 131, 1 % de C.I. violet acide 48, et hydroxyéthylcellulose.

9. Matériau selon la revendication 1, dans lequel :
(a) le matériau luminescent et les matériaux non luminescents sont présents en un rapport en poids au liant compris entre 3,8/1 et 10/1, de préférence 4,8/1 ; et/ou
(b) le rapport des matériaux non luminescents à luminescent dans la composition luminescente chromatique est compris entre 2/90 % et 20/80 % en poids.

10. Matériau selon la revendication 1, dans lequel la composition luminescente chromatique est appliquée à un matériau choisi dans le groupe constitué par les vêtements, les tentes, les couvertures d'armes et de véhicules, les filets, les parachutes, et d'autres étoffes, textiles et couvertures.

11. Composition luminescente chromatique, comprenant au moins un matériau non luminescent, au moins un matériau luminescent et au moins un liant, laquelle composition luminescente chromatique module la couleur, la luminosité et/ou la fréquence par absorption et émission en fonction d'un rayonnement électromagnétique incident,
laquelle composition luminescente chromatique appliquée à un textile n'altère pas significativement la main du textile, et
dans laquelle le rapport en poids du liant au matériau luminescent est de 3,8/1 à 10/1, et
dans lequel la fluorescence de la composition luminescente chromatique est supérieure à 5000 u.a. quand la composition luminescente chromatique est excitée à 470 nm et la fluorescence est mesurée à une λmax de 518,6.

12. Composition luminescente chromatique selon la revendication 11, dans laquelle le spectre d'absorption d'au moins un des matériaux luminescents chevauche au moins partiellement le spectre d'émission d'au moins un des matériaux luminescents ; et/ou
dans lequel le spectre d'absorption d'au moins un des matériaux non luminescents chevauche en outre partiellement le spectre d'émission d'au moins un des matériaux luminescents.

13. Composition luminescente chromatique selon la revendication 11, formulée pour une application à un matériau textile.

14. Procédé pour préparer le matériau de la revendication 1, comprenant l'application d'une solution ou suspension de la composition luminescente chromatique de la revendication 11 à un matériau choisi dans le groupe constitué par les vêtements, les tentes, les couvertures d'armes et de véhicules, les filets, les parachutes, et d'autres étoffes, textiles et couvertures, et l'élimination du solvant,
de préférence lequel procédé comprend l'application de la composition luminescente chromatique à un matériau textile formé d'une fibre naturelle telle que le coton, le lin, la cellulose, le chanvre et le jute, la soie, ou la laine, de fibres synthétiques de polymères tels que les polyesters, polyéthylènes, acryliques, nylons, polypropylènes, poly(téréphtalates d'éthylène), les mélanges de fibres acryliques, les polymères élastiques, et leurs mélanges, composites, et stratifiés.

15. Procédé selon la revendication 14, dans lequel l'application de la composition luminescente chromatique est effectuée par un procédé de pulvérisation, saturation, impression ou moussage, et de préférence dans lequel l'application de la composition luminescente chromatique ou du liant est effectuée par sérigraphie, soit à tamis plat soit à tamis rotatif ; impression par jet d'encre ; revêtement par saturation ; revêtement par pulvérisation ; teinture en cuve ; ou l'une quelconque de leurs combinaisons.
